# EUROPÄISCHE PATENTSCHRIFT

(11) **EP 4 058 299 B1**
(45) Veröffentlichungstag und Bekanntmachung des Hinweises auf die Patenterteilung: **03.01.2024**
(21) Anmeldenummer: 20806975.7
(22) Anmeldetag: 11.11.2020
(51) Int. Cl.: B44C 1/17, C08J 7/04, C08J 7/12

(54) **TRANSFERFOLIE ZUM ÜBERTRAGEN VON BESCHICHTUNGSMATERIALIEN AUF BAUTEILE**
TRANSFER FILM FOR TRANSFERRING COATING MATERIALS TO COMPONENTS
FILM DE TRANSFERT PERMETTANT LE TRANSFERT DE MATÉRIAUX DE REVÊTEMENT SUR DES ÉLÉMENTS

(30) Priorität: 14.11.2019 DE 102019217560
(43) Veröffentlichungstag der Anmeldung: 21.09.2022
(73) Patentinhaber: Loparex Germany GmbH & Co. KG, 91301 Forchheim (DE)
(72) Erfinder: KUNZELMANN, Peter, 91056 Erlangen (DE)
(74) Vertreter: Kutzenberger Wolff & Partner
(86) Internationale Anmeldenummer: PCT/EP2020/081733
(87) Internationale Veröffentlichungsnummer: WO 2021/094358

(56) Entgegenhaltungen:
- DE-A1-102018 105 523
- US-A1- 2008 302 470

## Beschreibung

Die Erfindung betrifft eine Kunststofffolie zur Beschichtung von Kunststoffformteilen mit einem Beschichtungsmaterial, wobei die Kunststofffolie eine haftungsmodifizierte Schicht sowie eine Schicht aus dem Beschichtungsmaterial umfasst; wobei die Kunststofffolie mitsamt der haftungsmodifizierten Schicht und der Schicht aus dem Beschichtungsmaterial bei Raumtemperatur tiefziehfähig ist; wobei das Beschichtungsmaterial die haftungsmodifizierte Schicht teil- oder vollflächig bedeckt; und wobei die haftungsmodifizierte Schicht eine Schichtdicke von mindestens 1,0 µm aufweist; und wobei die haftungsmodifizierte Schicht mit dem Beschichtungsmaterial in direktem Kontakt steht. Außerdem betrifft die Erfindung Verwendungen der erfindungsgemäßen Kunststofffolie, Verfahren zu ihrer Herstellung sowie Verfahren zur Beschichtung von Bauteilen unter Einsatz der erfindungsgemäßen Kunststofffolie.

Zur Herstellung von Faserverbund-Formbauteilen und anderen Kunststoffformteilen , wie z.B. aus Polyurethanschäumen, werden häufig Vakuuminfusionsverfahren oder Resin-Transfer-Molding-Verfahren eingesetzt. Dabei wird ein herzustellendes Kunststoffformteil innerhalb eines Formwerkzeugs durch Infusion bzw. Injektion mit einem aushärtbaren Kunststoffmaterial versehen. Sollen die resultierenden Kunststoffformteile nach dem Aushärten des aushärtbaren Kunststoffmaterials anschließend beschichtet werden, so wird anschließend das Bauteil gereinigt, vorbehandelt und beschichtet bzw. lackiert. Alternativ ist eine In-Mold-Lackierung möglich, bei der bereits zu Anfang die Oberfläche des Formwerkzeugs zunächst mit einem Lacksystem versehen wird. Während dieses Lacksystem bereits mit dem Aushärten begonnen hat, wird anschließend darauf das Kunststoffformteil hergestellt. Nach der zumeist thermischen Aushärtung sind sowohl das Harz als das verwendete Lacksystem ausgehärtet.

Diese Verfahren sind aufwändig und wenig effizient. Es besteht ein Bedarf an effektiven Verfahren zur Beschichtung von Kunststoffformteilen, welche sich in den bereits verwendeten Herstellungsprozess integrieren lassen, ohne dass eine In-Mold-Lackierung des Formwerkzeugs oder eine nachträgliche Beschichtung oder Lackierung des Kunststoffformteils vorgenommen werden muss. Nach Möglichkeit soll das Kunststoffformteil direkt mit einer gewünschten Oberflächenbeschichtung versehen werden, ohne dass die hergestellten Kunststoffformteile nachträglich bewegt, gereinigt und lackiert werden müssen, und ohne dass die Formen gereinigt werden müssen.

EP 0 361 351 offenbart eine Folie, welche auf der einen Seite mit einem strahlungshärtbaren Lack und auf der anderen Seite mit einem Klebstoff beschichtet wird. Der Lack wird durch Bestrahlung ausgehärtet, der Film erwärmt und plastisch auf einen dreidimensionalen Gegenstand aufgebracht.

EP 0 819 520 offenbart ein Verfahren, mit dem eine Filmbeschichtung auf dreidimensional gekrümmte Oberflächen von dimensionsstabilen Substraten aufgebracht werden kann. Die Folie umfasst eine oder mehrere Überzugsschichten und einen Klebstoff. Vor dem Auftragen auf den Untergrund wird die Beschichtung ohne Klebstoff teilgehärtet. Nach dem Auftragen erfolgt die endgültige Aushärtung.

EP 0 950 492 offenbart ein Übertragungsmaterial und eine Oberflächenschutzfolie, die einen geformten Artikel mit Abriebbeständigkeit und chemischer Beständigkeit versehen kann, ohne Bildung von Rissen im gekrümmten Teil des geformten Artikels zu bewirken.

EP 1 177 875 offenbart eine thermoformbare Folie mit einer dekorativen Farbschicht und mit Ablöseeigenschaften, welche in einen Formwerkzeughohlraum eingebracht wird, welcher der endgültigen Produktform entspricht, und Kunststoff wird auf die Rückseite der Folie gespritzt. Der resultierende Formkörper wird dann von dem Film getrennt, wobei die Farbschicht in der Formkörperoberfläche diffundiert.

EP 1 304 235 offenbart die Erzeugung einer strukturierten Lackschicht mittels einer Trägerfolie. Dabei soll nach der Übertragung der Struktur in einem Spritzgussverfahren eine Träger-Folie mit "Release"-Eigenschaft abgezogen werden.

EP 2 626 186 betrifft eine dekorative Harzfolie und einen geformten Harzgegenstand und ein Verfahren zur Herstellung des geformten Harzartikels und insbesondere die Herstellung eines spritzgegossenen Gegenstands, der durch Übertragung von einer dekorativen Harzfolie geprägt wird.

US 2008/0302470 betrifft ein Übertragungsblatt, das zum Erzeugen eines Übertragungsbildes auf einem Objekt (zum Beispiel einem tief gefärbten Objekt) wie Kleidung durch Erzeugen eines Aufzeichnungsbildes und Übertragen des Aufzeichnungsbildes auf das Objekt geeignet ist, und ein Verfahren zum Erzeugen eines Aufzeichnungsbildes.

WO 95/16555 offenbart eine Vorrichtung und ein Verfahren zum Bedrucken von Bauteilen aus Polymerwerkstoffen durch Tiefziehen einer thermoplastischen Folie, auf die eine Materialschicht aufgebracht ist, die einen thermisch diffundierbaren Farbstoff trägt. Die Wärme des Thermoformens wird verwendet, um zu bewirken, dass der Farbstoff von der Trägerschicht auf die thermoplastische Folie diffundiert. In einer alternativen Ausführungsform nutzt die Erfindung die Wärme des Spritzgießens, um sublimierbare Farbstoffe von einer in eine Spritzgussform eingelegten Trägerschicht auf das Spritzgussbauteil zu übertragen.

WO 00/13893 offenbart eine Folie, die mit mehreren Schichten beschichtet ist. Die Oberfläche einer 10 bis 500 µm dicken Kunststofffolie wird mit mindestens einer gegebenenfalls pigmentierten Lackschicht und die Lackschicht gegebenenfalls mit einer weiteren thermoplastischen Folie beschichtet.

WO 2005/099943 offenbart einen flexiblen Schichtverbund aus einem Substrat und einer darauf aufgebrachten Schicht, die aus einem härtbaren Lack besteht. Das flexible Verbundlaminat ist beim thermischen Trocknen nicht klebrig. Auf die aushärtbare Lackschicht wird vorzugsweise mindestens eine abziehbare Schutzschicht aufgebracht, vorzugsweise eine abziehbare Schutzfolie.

WO 2013/160437 offenbart das Auftragen eines Schutzschichtsystems in der Form, welches eine Kunststofffolie und eine plasmapolymere siliziumorganische Schicht umfasst. Dabei haftet die plasmapolymere siliziumorganische Schicht nach einem Aushärtungsschritt stärker an der Kunststofffolie als an dem Kunststoffformteil oder dem Kunststoffhalbzeug.

WO 2014/083732 offenbart In-Mold-Formungsverfahren, bei denen eine harte Beschichtungsschicht zum Einsatz kommt, welche eine nur sehr geringe Dehnbarkeit aufweist.

WO 2014/124945 offenbart silikonbeschichtete Trennfolien mit besonderer Vakuumtiefziehfähigkeit in der Form zur Herstellung von Kunststoffformteilen, auf denen ein Lack aufgetragen wird.

DE 4 425 342 offenbart ein Verfahren zur Herstellung eines Transferfilms auf einem Formteil. Der Transferfilm dient zur gleichzeitigen Bereitstellung von Bildern beim Umformprozess, wobei sichergestellt ist, dass sich der Trägerfilm des Transferfilms nach seiner Übertragung auf das Formteil gleichmäßig von der Bild- oder Designschicht ablösen kann, ohne dass sich die Formgebungsausbeute dadurch verschlechtert.

DE 101 40 769 betrifft Folien, beschichtet wenigstens mit zwei Lackschichten, wobei auf der Trägerfolie wenigstens eine Lackschicht vorhanden ist, die durch Strahlen härtbar ist, und wenigstens eine zweite Lackschicht vorhanden ist, die zumindest teilweise ohne Strahlung härtbar ist.

DE 10 2004 055363 offenbart einen flexiblen Schichtverbund mit einem Träger und mindestens einer auf den Träger aufgebrachten Schicht härtbaren Lackes. Vorzugsweise ist auf der Schicht härtbaren Lackes mindestens eine entfernbare Schutzschicht aufgebracht, vorzugsweise eine entfernbare Schutzfolie.

DE 10 2006 021646 offenbart eine Folie, insbesondere mehrschichtige Folie, mit wenigstens einer an einer Außenseite angeordneten Folienschicht aus Polypropylen, wobei wenigstens eine Polypropylenschicht mit wenigstens einem weiteren Material vermischt ist.

DE 10 2016 120781 offenbart eine Verbundfolie zur Beschichtungsstoffübertragung, umfassend eine Trägerfolie aus Kunststoff, einen ausgehärteten Beschichtungsstoff und eine siliziumorganische Schicht, die zwischen der Trägerfolie und dem Beschichtungsstoff angeordnet ist.

DE 10 2018 105523 betrifft ein Verfahren zur Herstellung eines dekorierten Formteils, ein dekoriertes Formteil sowie die Verwendung einer Transferfolie zur Herstellung eines dekorierten Formteils.

Die Verfahren zur Übertragung von Beschichtungsstoffen bzw. Lacken auf Kunststoffformteile sind nicht in jeglicher Hinsicht zufriedenstellend und es besteht ein Bedarf an Verbesserungen.

Es war eine Aufgabe der Erfindung, ein Verfahren zur Beschichtung von Kunststoffformteilen mit einem Beschichtungsmaterial bereitzustellen, welches Vorteile gegenüber den Verfahren des Standes der Technik aufweist. Das Beschichtungsverfahren sollte zuverlässig und ohne nachgelagerten Beschichtungsschritt in den Fertigungsablauf eines industriellen Herstellungsprozesses von Kunststoffformteilen integriert werden können. Insbesondere sollte die Beschichtung so in die bekannten industriellen Herstellungsprozesse integriert werden können, dass keine besonderen Sicherheitsmaßnahmen notwendig sind. Weiterhin sollte das vorbereitete Beschichtungsmaterial lange gelagert werden können, ehe es auf die Oberfläche des Kunststoffformteils aufgebracht wird.

Diese Aufgabe wird durch den Gegenstand der Patentansprüche gelöst.

Es wurde überraschend gefunden, dass sich eine Trägerfolie bereitstellen lässt, welche mit einem aushärtbaren Beschichtungsmaterial beschichtet werden kann, das Beschichtungsmaterial anschließend ausgehärtet werden kann, ggf. unter Erwärmung, und die so hergestellte Kunststofffolie mit dem Beschichtungsmaterial im bereits ausgehärteten Zustand anschließend bei Raumtemperatur tiefgezogen werden kann, ohne dass sich das Beschichtungsmaterial von den Kunststofffolien ablöst.

Ferner wurde überraschend gefunden, dass mit Hilfe der tiefgezogenen Kunststofffolie ein Kunststoffformteil hergestellt werden kann, dessen Oberfläche durch das Beschichtungsmaterial gebildet und dessen Oberflächenbeschaffenheit durch die zuvor tiefgezogene Kunststofffolie bestimmt wird (z.B. durch deren Rauigkeit, Glanz, Struktur, Prägung, etc.), indem eine geeignete aushärtbare Kunststoffzusammensetzung mit dem Beschichtungsmaterial in Kontakt gebracht wird und dabei unter Bildung des Kunststoffformteils aushärtet.

Darüber hinaus wurde überraschend gefunden, dass die aushärtbare Kunststoffzusammensetzung beim Aushärten mit dem Beschichtungsmaterial eine Verbundhaftung ausbilden kann, welche größer ist als die Verbundhaftung des Beschichtungsmaterials auf der Trägerfolie. Auf diese Weise wird ein Kunststoffformteil erhalten, welches auf seiner Oberfläche mit der tiefgezogenen Kunststofffolie bedeckt und dadurch geschützt ist. Wird die Trägerfolie abgezogen, so verbleibt das Beschichtungsmaterial wegen der größeren Verbundhaftung als äußere Beschichtung auf der Oberfläche des Kunststoffbauteils zurück und es wird ein beschichtetes Kunststoffbauteil erhalten, dessen beschichtete Oberfläche bei Bedarf ggf. ohne weitere Reinigungs- oder Vorbehandlungsschritte weiter bearbeitet oder modifiziert werden kann.

Durch geeignete Wahl kompatibler Materialien für Trägerfolie, Beschichtungsmaterial und aushärtbarer Kunststoffzusammensetzung ist es möglich zu gewährleisten, dass das Beschichtungsmaterial im noch nicht ausgehärteten Zustand die Trägerfolie ausreichend benetzt, und nach dem Aushärten so gut daran haftet, dass die Kunststofffolie mitsamt dem Beschichtungsmaterial in Anbetracht der ausreichenden Adhäsion bei Raumtemperatur tiefgezogen werden kann. Wenn dann später beim Einsatz der erfindungsgemäßen Kunststofffolie das Beschichtungsmaterial mit der aushärtbaren Kunststoffzusammensetzung für das Kunststoffformteil in Kontakt gebracht wird, kommt es zum Aushärten der Kunststoffzusammensetzung, wodurch sich deren Eigenschaften ändern.

Wenn Beschichtungsmaterial und aushärtbare Kunststoffzusammensetzung auf kompatiblen Materialien basieren, kommt es beim Aushärten der Kunststoffzusammensetzung zur Ausbildung einer stärkeren Bindung zwischen Beschichtungsmaterial und der Oberfläche des Kunststoffformteils, wodurch die Verbundhaftung besonders stark ist. Dies kann auf die Ausbildung stärkerer kovalenter Bindungen und/oder auf eine größere Anzahl kovalenter Bindungen pro Fläche zurückzuführen sein. So ist zu erklären, dass beim Abziehen der Trägerfolie vom Kunststoffformteil nicht mehr die Kontaktfläche Kunststoffformteil <-> Beschichtungsmaterial, sondern die Kontaktfläche Beschichtungsmaterial <-> Trägerfolie die geringste Verbundhaftung im Laminat aufweist, so dass die Delaminierung dort erfolgt. Erfindungsgemäß müssen jedoch zur Erreichung dieser Wirkung nicht zwingend kovalente Bindungen ausgebildet werden, sondern es reicht ggf. aus, wenn unterschiedlich starke physikalische Wechselwirkungen bestehen bzw. nicht-kovalente Bindungen ausgebildet werden.

Ein erster Aspekt der Erfindung betrifft eine Kunststofffolie zur Beschichtung von Kunststoffformteilen mit einem Beschichtungsmaterial, wobei die Kunststofffolie bei Raumtemperatur tiefziehfähig ist und eine haftungsmodifizierte Schicht sowie eine Schicht aus dem Beschichtungsmaterial umfasst; wobei das Beschichtungsmaterial die haftungsmodifizierte Schicht teil- oder vollflächig bedeckt;
wobei die haftungsmodifizierte Schicht eine Schichtdicke von mindestens 1,0 µm aufweist, mit dem Beschichtungsmaterial in direktem Kontakt steht, und
(i) auf ihrer dem Beschichtungsmaterial zugewandten Oberflächenseite eine Oberflächenenergie von mindestens 27 mN/m aufweist; und
(ii) auf einer Mischung basiert, welche wenigstens ein Polyolefin und wenigstens (a) einen Haftvermittler, (b) ein thermoplastisches Elastomer oder (c) eine Polyamid-Legierung umfasst.

Sofern nichts anderes bestimmt ist, gelten alle in der Beschreibung angegebenen Normen in der am Anmeldetag der Patentanmeldung zuletzt gültigen Fassung.

Das Beschichtungsmaterial und die aushärtbare Kunststoffzusammensetzung sind vorzugsweise beide jeweils aushärtbar, d.h. treten beide zunächst in einem aushärtbaren Zustand und anschließend in einem ausgehärteten Zustand in Erscheinung. Bei der Herstellung der erfindungsgemäßen Kunststofffolie wird das aushärtbare Beschichtungsmaterial (z.B. ein Reaktivlack) zunächst mit der haftungsmodifizierten Schicht in Kontakt gebracht, wobei die Benetzung für eine Anhaftung ausreicht. An der haftungsmodifizierten Schicht härtet dann das Beschichtungsmaterial aus, ggf. unter Ausbildung kovalenter Bindungen oder nicht-kovalenter physikalischer Wechselwirkungen an der Kontaktfläche zwischen dem ausgehärteten Beschichtungsmaterial und der haftungsmodifizierten Schicht. Beim anschließenden Einsatz der so hergestellten erfindungsgemäßen Kunststofffolie wird nach dem Tiefziehen das ausgehärtete Beschichtungsmaterial auf seiner der haftungsmodifizierten Schicht abgewandten Seite zunächst mit der aushärtbaren Kunststoffzusammensetzung in Kontakt gebracht. Die aushärtbare Kunststoffzusammensetzung benetzt dabei das ausgehärtete Beschichtungsmaterial. Anschließend härtet die Kunststoffzusammensetzung aus unter Ausbildung kovalenter Bindungen oder nicht-kovalenter physikalischer Wechselwirkungen an der Kontaktfläche zwischen dem ausgehärteten Beschichtungsmaterial und der ausgehärteten Kunststoffzusammensetzung. Infolge der Art bzw. Anzahl dieser kovalenten Bindungen oder nicht-kovalenten physikalischen Wechselwirkungen ist die Haftung des ausgehärteten Beschichtungsmaterials an der ausgehärteten Kunststoffzusammensetzung stärker als die Haftung des ausgehärteten Beschichtungsmaterials and der haftungsmodifizierten Schicht.

Die erfindungsgemäße Kunststofffolie ist geeignet zur Beschichtung von Kunststoffformteilen mit einem Beschichtungsmaterial.

Als Kunststoffformteile kommen dabei z.B. Faserverbundwerkstoffe in Betracht, bei denen Fasern mit aushärtbaren Harzen, z.B. Epoxid-Harzen, Acrylat-Harzen, Urethan-Harzen, Phenol-Novolak-Harzen, ungesättigten Polyester-Harzen getränkt werden. Die Harze werden dabei häufig aus einer oder zwei Komponenten bereitgestellt. Die Harze härten spontan bei Raumtemperatur aus oder benötigen zum Aushärten eine gesonderte Aktivierung, häufig durch Wärme, Strahlung oder Feuchtigkeit. Erfindungsgemäß besonders bevorzugte Kunststoffformteile werden als Schäume hergestellt, wobei Polyurethanschäume besonders bevorzugt sind.

Die erfindungsgemäße Beschichtung der Kunststoffformteile mit dem Beschichtungsmaterial unter Einsatz der erfindungsgemäßen Kunststofffolie erfolgt typischerweise derart, dass die Kunststofffolie zunächst tiefgezogen wird, bevorzugt bei Raumtemperatur oder bei erhöhter Temperatur von vorzugsweise nicht mehr als 90°C, bevorzugt im Bereich von 70 bis 80°C, und die tiefgezogenen Kunststofffolie auf diese Weise eine dreidimensionale Gestaltung erhält. Dabei erfolgt das Tiefziehen bevorzugt in einer Weise, bei der das Beschichtungsmaterial dem Inneren der tiefgezogenen Gestaltung zugewandt ist.

Der Tiefziehgrad ist erfindungsgemäß grundsätzlich nicht eingeschränkt, ist jedoch von der jeweiligen Beschaffenheit der einzelnen Schichten der Kunststofffolie, insbesondere auch des Beschichtungsmaterials abhängig. Bevorzugte Tiefziehverhältnisse können beispielsweise im Bereich von 2% bis 400% liegen, bevorzugt 5% bis 300%, oder 5% bis 50%.

Bevorzugt wird dabei die erfindungsgemäße Kunststofffolie auf ein geeignetes Werkzeug geeigneter Form gelegt, beispielsweise mit Hilfe eines geeigneten Spannwerkzeugs darauf aufgebracht und am Rand mit dem Werkzeug luftdicht verschlossen, wodurch sich ein geschlossener Hohlraum bildet, welcher auf der einen Seite durch die Kunststofffolie und auf der anderen Seite durch das Werkzeug gebildet wird. Das Beschichtungsmaterial der Kunststofffolie ist diesem Hohlraum zunächst abgewandt. Durch Anlegen eines Vakuums im Hohlraum kann dann die Kunststofffolie tiefgezogen werden und schmiegt sich anschließend an die innere Oberfläche des Werkzeugs an. Dadurch ist nun das Beschichtungsmaterial dem Inneren der tiefgezogenen Gestaltung zugewandt. Bevorzugt wird die erfindungsgemäße Kunststofffolie bei Raumtemperatur auf das Werkzeug aufgebracht und auch bei Raumtemperatur tiefgezogen. Da das Werkzeug jedoch üblicherweise temperiert ist, beispielsweise auf eine erhöhte Temperatur von vorzugsweise nicht mehr als 90°C, bevorzugt im Bereich von 70 bis 80°C, wird beim Tiefziehvorgang auch die erfindungsgemäße Kunststofffolie in gewissem Maße erwärmt, insbesondere wenn sie am Ende des Tiefziehvorgangs mit der Oberfläche des temperierten Werkzeugs in Kontakt kommt.

Anschließend wird mit Hilfe des Werkzeugs das Beschichtungsmaterial auf das herzustellende Kunststoffformteil zumindest in einem Abschnitt von dessen äußerer Oberfläche übertragen. Dabei wird das Werkzeug zur Formgebung des Kunststoffformteils genutzt, wobei die Formgebung des Werkzeugs für die Formgebung des Kunststoffformteils maßgeblich ist. Ferner wird dabei das Beschichtungsmaterial auf das Formteil übertragen, wobei die Oberflächenbeschaffenheit des Beschichtungsmaterials durch die zuvor tiefgezogene Kunststofffolie bestimmt wird (z.B. durch deren Rauigkeit, Glanz, Struktur, Prägung, etc.).

Die tiefgezogene Kunststofffolie hat zusätzlich auch eine beschichtende Wirkung, da das zunächst auf der Trägerschicht (haftungsmodifizierten Schicht) der Kunststofffolie befindliche Beschichtungsmaterial auf die Oberfläche des Kunststoffformteils *in situ* übertragen wird. Von besonderem Vorteil ist es dabei, dass alle übrigen Bestandteile der Kunststofffolie (haftungsmodifizierte Schicht und alle übrigen ggf. vorhandenen Schichten) zunächst auf der Oberfläche des Kunststoffformteile verbleiben können und auf diese Weise dessen beschichtete Oberfläche schützen. Entweder unmittelbar nach der Herstellung des Kunststoffformteils oder aber auch zu einem späteren Zeitpunkt können diese übrigen Bestandteile der Kunststofffolie dann in einem Arbeitsgang rückstandsfrei von der Oberfläche des Kunststoffformteils abgezogen werden, wodurch dessen beschichtete Oberfläche freigelegt wird.

Die rückstandsfreie Entnahme des fertigen Kunststoffformteils aus dem Werkzeug ist erfindungsgemäß bevorzugt dadurch möglich, dass die Haftung zwischen der dem Kunststoffformteil abgewandten Außenseite der Kunststofffolie und der Werkzeugoberfläche geringer ist als die Haftung zwischen der Trägerschicht (haftungsmodifizierten Schicht) und dem Beschichtungsmaterial sowie die Haftung zwischen dem Beschichtungsmaterial und der ausgehärteten Kunststoffzusammensetzung des Kunststoffformteils. Auf den Einsatz von Formentrennmitteln etc. kann daher erfindungsgemäß bevorzugt verzichtet werden und auch eine Reinigung der Werkzeugoberfläche ist bevorzugt nicht erforderlich.

Die erfindungsgemäße Kunststofffolie ist bei Raumtemperatur tiefziehfähig. Die erfindungsgemäße Kunststofffolie muss nicht zwingend bei Raumtemperatur tiefgezogen werden. Vielmehr ist es erfindungsgemäß auch möglich, die Kunststofffolie bei erhöhter Temperatur tiefzuziehen, vorzugsweise allerdings bei nicht mehr als 90°C. Viele herkömmliche Kunststofffolien sind bei Raumtemperatur (23°C) nicht tiefziehfähig, sondern benötigen eine Erwärmung auf erhöhte Temperatur, weil die Kunststoffe, auf denen diese herkömmlichen Kunststofffolien basieren, höhere Erweichungstemperaturen haben. Die erfindungsgemäße Kunststofffolie ist jedoch bei 23°C tiefziehfähig, wobei diese Tiefziehfähigkeit bevorzugt dadurch definiert ist, dass die Bruchdehnung der Kunststofffolie bei 23°C mindestens 25% oder mindestens 50%, bevorzugter mindestens 75% oder mindestens 100% beträgt, noch bevorzugter mindestens 150% oder mindestens 200%, besonders bevorzugt mindestens 250%, am bevorzugtesten mindestens 300% und insbesondere mindestens 350% beträgt. Die Bestimmung der Bruchdehnung bei 23°C erfolgt dabei erfindungsgemäß bevorzugt gemäß EN ISO 527. Bevorzugt beträgt dabei die Kraft bei Dehnungen bis 350 % höchstens 30 N/15 mm, bevorzugter höchstens 25 N/15 mm, noch bevorzugter höchstens 20 N/15 mm.

Die erfindungsgemäße Kunststofffolie ist als solche bei Raumtemperatur tiefziehfähig, d.h. alle ihre Bestandteile weisen diese Eigenschaft auf. Neben der Trägerschicht (haftungsmodifizierten Schicht) sind also auch alle übrigen Bestandteile der Kunststofffolie bei Raumtemperatur tiefziehfähig, insbesondere auch das Beschichtungsmaterial. Neben der vorstehend erwähnten Bruchdehnung bedeutet eine Tiefziehfähigkeit bei Raumtemperatur, dass das Beschichtungsmaterial beim Tiefziehvorgang an der Trägerschicht (haftungsmodifizierten Schicht) haften bleibt, sich also nicht vorzeitig ablöst.

Die erfindungsgemäße Kunststofffolie umfasst eine haftungsmodifizierte Schicht sowie eine Schicht aus dem Beschichtungsmaterial. Demnach weist die erfindungsgemäße Kunststofffolie mindestens 2 Schichten auf (Monofolie), wobei die Schicht aus dem Beschichtungsmaterial ggf. nicht vollflächig sein muss. Die erfindungsgemäße Kunststofffolie kann neben der haftungsmodifizierten Schicht und der Schicht aus dem Beschichtungsmaterial eine oder mehrere zusätzliche Schichten umfassen. In bevorzugten Ausführungsformen besteht die erfindungsgemäße Kunststofffolie aus insgesamt 2, 3, 4, 5 oder 6 Schichten.

In einer bevorzugten Ausführungsform umfasst die erfindungsgemäße Kunststofffolie eine Schicht aus Beschichtungsmaterial, eine haftungsmodifizierte Schicht und eine weitere Schicht, welche bevorzugt die andere Außenseite der Kunststofffolie bildet (bevorzugte Schichtabfolge: Beschichtungsmaterial // haftungsmodifizierte Schicht // weitere Schicht). Dabei können ggf. zwischen der haftungsmodifizierten Schicht und der weiteren Schicht und/oder auf der Außenseite der weiteren Schicht eine oder mehrere zusätzliche Schichten vorhanden sein. In einer bevorzugten Ausführungsform besteht die erfindungsgemäße Kunststofffolie aus der Schicht aus Beschichtungsmaterial, der haftungsmodifizierten Schicht und der weiteren Schicht.

In einer anderen bevorzugten Ausführungsform besteht die erfindungsgemäße Kunststofffolie aus einer Schicht aus Beschichtungsmaterial, einer haftungsmodifizierte Schicht, einer Kernschicht und einer weiteren Schicht, welche bevorzugt die andere Außenseite der Kunststofffolie bildet (bevorzugte Schichtabfolge: Beschichtungsmaterial // haftungsmodifizierte Schicht // Kernschicht // weitere Schicht). Dabei können ggf. zwischen der haftungsmodifizierten Schicht und der Kernschicht und/oder zwischen der Kernschicht und der weiteren Schicht und/oder auf der Außenseite der weiteren Schicht eine oder mehrere zusätzliche Schichten vorhanden sein. In einer bevorzugten Ausführungsform besteht die erfindungsgemäße Kunststofffolie aus der Schicht aus Beschichtungsmaterial, der haftungsmodifizierten Schicht, der Kernschicht und der weiteren Schicht.

Das Beschichtungsmaterial bedeckt die haftungsmodifizierte Schicht teil- oder vollflächig, wobei das Beschichtungsmaterial seinerseits ein- oder mehrschichtig sein kann. Bevorzugt bedeckt das Beschichtungsmaterial mindestens 20% der Fläche der haftungsmodifizierten Schicht, bevorzugter mindestens 40%, noch bevorzugter mindestens 60%, besonders bevorzugter mindestens 80%, am bevorzugtesten mindestens 90% und insbesondere mindestens 95%. Eine teilflächige Bedeckung hat die Wirkung, dass auch das mit der erfindungsgemäßen Kunststofffolie hergestellte bzw. beschichtete Kunststoffformteil nur zu einem Teil an seiner Oberfläche mit dem Beschichtungsmaterial beschichtet wird, wobei sich der prozentuale Grad der Bedeckung durch das Tiefziehen üblicherweise verändert. Bevorzugt bedeckt das Beschichtungsmaterial die haftungsmodifizierte Schicht vollflächig.

Die haftungsmodifizierte Schicht der erfindungsgemäßen Kunststofffolie weist eine Schichtdicke von mindestens 1,0 µm auf, bevorzugt mindestens 2,5 µm, bevorzugter mindestens 5,0 µm, noch bevorzugter mindestens 7,5 µm, besonders bevorzugt mindestens 10 µm, am bevorzugtesten mindestens 12,5 µm und insbesondere mindestens 15 µm.

Die haftungsmodifizierte Schicht der erfindungsgemäßen Kunststofffolie weist bevorzugt eine Schichtdicke von höchstens 50 µm auf, bevorzugt höchstens 45 µm, bevorzugter höchstens 40 µm, noch bevorzugter höchstens 35 µm, besonders bevorzugt höchstens 30 µm, am bevorzugtesten höchstens 25 µm und insbesondere höchstens 20 µm.

Geeignete Methoden zur Bestimmung der Gesamtschichtdicke von Folien sowie der Schichtdicke einzelner Schichten sind einem Fachmann bekannt. Bevorzugt erfolgt die Bestimmung mikroskopisch am Mikrotomschnitt als Mittelwertbildung über 10 Messpunkte.

Die haftungsmodifizierte Schicht der erfindungsgemäßen Kunststofffolie steht mit dem Beschichtungsmaterial in direktem Kontakt.

Die haftungsmodifizierte Schicht weist auf ihrer dem Beschichtungsmaterial zugewandten Oberflächenseite eine Oberflächenenergie von mindestens 27 mN/m auf (i), bevorzugt mindestens 27.5 mN/m, bevorzugter mindestens 28 mN/m, noch bevorzugter mindestens 28.5 mN/m, besonders bevorzugt mindestens 29 mN/m, am bevorzugtesten mindestens 29.5 mN/m und insbesondere mindestens 30 mN/m.

In einer bevorzugten Ausführungsform (i) weist die haftungsmodifizierte Schicht auf ihrer dem Beschichtungsmaterial zugewandten Oberflächenseite eine Oberflächenenergie von höchstens 38 mN/m auf, bevorzugt höchstens 37 mN/m, bevorzugter höchstens 36 mN/m, noch bevorzugter höchstens 35 mN/m, besonders bevorzugt höchstens 34 mN/m, am bevorzugtesten höchstens 33 mN/m und insbesondere höchstens 32 mN/m.

Geeignete Methoden zur Bestimmung der Oberflächenenergie (Oberflächenspannung, spezifische Oberflächenenergie) von Polymerzusammensetzungen sind einem Fachmann bekannt. Bevorzugt erfolgt die Bestimmung gemäß DIN 55660-2:2011-12.

Die haftungsmodifizierte Schicht basiert auf einer Mischung (ii), welche wenigstens ein Polyolefin (bevorzugt ein Ethylen-Propylen Copolymer) und wenigstens (a) einen Haftvermittler (bevorzugt ein säureanhydridmodifiziertes Polyolefin), (b) ein thermoplastisches Elastomer oder (c) eine Polyamid-Legierung umfasst.

Sowohl Ausführungsform (i) als auch Ausführungsform (ii) werden beide gleichzeitig verwirklicht.

Die erfindungsgemäße Kunststofffolie ist bevorzugt thermisch belastbar. Auch wenn die erfindungsgemäße Kunststofffolie bevorzugt bei Raumtemperatur tiefgezogen wird (oder bei nur moderat erhöhter Temperatur), weist die bevorzugt eine hinreichende Temperaturstabilität auf, so dass das Beschichtungsmaterial nach dem Auftragen auf der haftungsmodifizierten Schicht getrocknet bzw. gehärtet werden kann. Je nach chemischer Zusammensetzung und Beschaffenheit der zur Herstellung der Schicht aus dem Beschichtungsmaterial eingesetzten Zusammensetzung kann es dazu beispielsweise angezeigt sein, Lösungsmittelrückstände zu verdampfen und/oder chemische Vernetzungsreaktionen zu induzieren. Dazu kann es bevorzugt sein, die erfindungsgemäße Kunststofffolie vor dem Tiefziehen zu erwärmen, bevorzugt auf eine Temperatur von nicht mehr als 120°C, bevorzugter nicht mehr als 110°C, noch bevorzugter nicht mehr als 100°C. Daher weisen bevorzugt die Polymere oder Polymermischungen in allen Schichten der erfindungsgemäßen Kunststofffolie jeweils eine Schmelztemperatur von mindestens 110°C auf, vorzugsweise bestimmt durch DSC gemäß DIN EN ISO 11357-3:2018-07, wobei im Falle von mehreren DSC Signalen auf das Hauptsignal abgestellt wird (z.B. im Falle von heterophasischen Ethylen-Propylen Copolymeren).

Die erfindungsgemäße Kunststofffolie ist bevorzugt nicht gereckt, d.h. nicht orientiert, weder monoaxial noch biaxial.

Die erfindungsgemäße Kunststofffolie weist bevorzugt eine Gesamtschichtdicke von mindestens 40 µm auf, bevorzugter mindestens 50 µm, noch bevorzugter mindestens 60 µm, besonders bevorzugt mindestens 70 µm, am bevorzugtesten mindestens 80 µm und insbesondere mindestens 90 µm. Sofern das Beschichtungsmaterial die haftungsmodifizierte Schicht nur teilweise bedeckt, wird die Gesamtschichtdicke an Stellen bestimmt, an denen die haftungsmodifizierte Schicht mit Beschichtungsmaterial bedeckt ist. Sofern das Beschichtungsmaterial zunächst mit Hilfe eines Lösungsmittels verarbeitet wurde, wird die Schichtdicke erfindungsgemäß im getrockneten Zustand gemessen.

Die erfindungsgemäße Kunststofffolie weist bevorzugt eine Gesamtschichtdicke von höchstens 250 µm auf, bevorzugter höchstens 200 µm, noch bevorzugter höchstens 180 µm, besonders bevorzugt höchstens 160 µm, am bevorzugtesten höchstens 140 µm und insbesondere höchstens 120 µm. Sofern das Beschichtungsmaterial die haftungsmodifizierte Schicht nur teilweise bedeckt, wird die Gesamtschichtdicke an Stellen bestimmt, an denen die haftungsmodifizierte Schicht mit Beschichtungsmaterial bedeckt ist.

In einer bevorzugten Ausführungsform ist die erfindungsgemäße Kunststofffolie wenigstens einseitig geprägt, bevorzugt doppelseitig geprägt. Dies kann von Vorteil sein, wenn die Oberfläche des herzustellenden Kunststoffformteils strukturiert sein soll. Die Prägung der Kunststofffolie ist dann auch das Beschichtungsmaterial erstreckt und überträgt sich dann auf die Oberfläche des Kunststoffformteils.

Das Beschichtungsmaterial der erfindungsgemäßen Kunststofffolie muss gewisse Eigenschaften aufweisen, insbesondere mit dem Material der haftungsmodifizierten Schicht sowie dem Material des Kunststoffformteils, dessen Oberfläche beschichtet werden soll, kompatibel sein. Für einen Transfer des Beschichtungsmaterials von der Kunststofffolie auf das Kunststoffformteil ist es wesentlich, dass das Beschichtungsmaterial zu dem Material des Kunststoffformteils eine Verbundhaftung ausbildet, welche größer ist als die Verbundhaftung der Beschichtungsmaterials zur haftungsmodifizierten Schicht. Andernfalls würde später beim Abziehen der Kunststofffolie (haftungsmodifizierte Schicht sowie ggf. weitere vorhandene Schichten) das Beschichtungsmaterial nicht auf der Oberfläche des Kunststoffformteils zurückbleiben, sondern zusammen mit der Kunststofffolie abgezogen werden.

Materialien geeigneter Kompatibilität können von einem Fachmann im Rahmen üblicher Routineversuche ermittelt werden. Dabei ist es grundsätzlich von Vorteil, wenn die chemische Natur des Beschichtungsmaterials der chemischen Natur des Materials, aus dem das Kunststoffformteil hergestellt werden soll, zumindest ähnlich ist. Soll das Kunststoffformteil beispielsweise aus einem Polyurethanschaum hergestellt werden, so ist es von Vorteil, wenn auch das Beschichtungsmaterial auf Polyurethan basiert, oder zumindest funktionelle Gruppen enthält, welche mit den reaktiven Komponenten von Polyurethanschäumen kovalente Bindungen ausbilden können (z.B. -OH, -NHR, -NH₂, -C(=O)OH, -C(=O)OC(=O)R, etc.). Dabei wird die Kompatibilität nicht nur durch die chemische Natur der funktionellen Gruppen und der sich ggf. durch Reaktion ergebenen kovalenten Bindungen bzw. der durch nicht-kovalente Bindungen erzeugten physikalischen Wechselwirkungen bestimmt, sondern insbesondere auch durch die Anzahl der zur Verfügung stehenden funktionellen Gruppen. Diese Parameter müssen ausgewogen werden mit den entsprechenden Wechselwirkungen zwischen dem Beschichtungsmaterial und der haftungsmodifizierten Schicht.

Üblicherweise wird es von Vorteil sein, wenn das Beschichtungsmaterial mit dem Material des Kunststoffformteils mehr und/oder stärkere kovalente und/oder nicht-kovalente Wechselwirkungen eingeht als das Beschichtungsmaterial mit der haftungsmodifizierten Schicht. Zur Abschätzung der jeweiligen Wechselwirkungen können neben chemischen Betrachtungen auch die Oberflächenenergien der beteiligten Materialen Anhaltspunkte geben. Auch die konkreten Reaktionsbedingungen, unter denen das Kunststoffformteil hergestellt wird (Druck, Temperatur) sind zu berücksichtigen.

Bevorzugt wurde das Beschichtungsmaterial aus einer aushärtbaren Zusammensetzung hergestellt, d.h. aus einer Zusammensetzung, welche chemisch unter Aushärtung reagiert, üblicherweise unter Quervernetzung. Bevorzugt liegt das Beschichtungsmaterial auf der haftungsmodifizierten Schicht in einem solchen, bereits ausgehärten d.h. quervernetzten Zustand vor. Wie vorstehend bereits erwähnt, kann die Aushärtung ggf. bei erhöhter Temperatur erfolgen, wobei es dann wichtig ist, dass die Kunststofffolie diesen Bedingungen standhält, was sich u.a. durch Wahl geeigneter Polymere mit geeigneten Schmelztemperaturen gewährleisten lässt. Wie vorstehend ebenfalls bereits erwähnt, muss das Beschichtungsmaterial jedoch auch in einem solchen ausgehärteten Zustand bei Raumtemperatur tiefziehfähig sein, d.h. eine ausreichende Bruchdehnung sowie Haftung an der haftungsmodifizierten Schicht aufweisen.

In einer besonders bevorzugten Ausführungsform ist das Beschichtungsmaterial ein Lack. Dabei kann der Lack ein thermisch härtender Lack oder ein UV härtender Lack sein. In einer bevorzugten Ausführungsform ist der Lack thermisch härtend. In einer anderen bevorzugten Ausführungsform ist der Lack UV härtend. Der Lack basiert bevorzugt auf Epoxid, Polyurethan oder Polyacrylat. Der Lack ist vorzugsweise mit der aushärtbaren Kunststoffzusammensetzung kompatibel, aus der das zu beschichtende Kunststoffformteil hergestellt wird. Bevorzugt basieren Lack und aushärtbare Kunststoffzusammensetzung beide auf Polymeren des gleichen Typs. Tiefziehfähige Lacke sind einem Fachmann bekannt und kommerziell verfügbar (beispielsweise bei Fa. Proell, Weißenburg, DE; Fa. Lott-Lacke, Herford, DE; oder Fa. Hesse Lignal, Hamm, DE).

In einer bevorzugten Ausführungsform basiert das Beschichtungsmaterial, z.B. der Lack, auf Epoxid, bevorzugt auf thermisch härtendem Epoxid, und die aushärtbare Kunststoffzusammensetzung basiert ebenfalls auf Epoxid, bevorzugt auf thermisch härtendem Epoxid.

In einer anderen bevorzugten Ausführungsform basiert das Beschichtungsmaterial, z.B. der Lack, auf Polyurethan, bevorzugt auf thermisch härtendem Polyurethan, und die aushärtbare Kunststoffzusammensetzung basiert ebenfalls auf Polyurethan, bevorzugt auf thermisch härtendem Polyurethan.

In einer weiteren bevorzugten Ausführungsform basiert das Beschichtungsmaterial, z.B. der Lack, auf Polyacrylat, bevorzugt auf thermisch härtendem Polyacrylat, und die aushärtbare Kunststoffzusammensetzung basiert ebenfalls auf Polyacrylat, bevorzugt auf thermisch härtendem Polyacrylat.

Das Beschichtungsmaterial kann farblos oder eingefärbt sein. Farbige Beschichtungsmaterialien, z.B. farbige Lacke, sind kommerziell verfügbar. In einer bevorzugten Ausführungsform bedeckt das Beschichtungsmaterial die haftungsmodifizierte Schicht teil- oder vollflächig, wobei die bedeckten Bereiche der haftungsmodifizierten Schicht lokal über die Fläche der haftungsmodifizierten Schicht mit unterschiedlichen Beschichtungsmaterialien bedeckt sind, z.B. mit Lacken unterschiedlicher Farbe. Die haftungsmodifizierte Schicht kann beispielsweise als Beschichtungsmaterial mit einem Druckbild aus unterschiedlichen Farben bedeckt sein, teil- oder vollflächig.

Erfindungsgemäß ist es bevorzugt, dass das Beschichtungsmaterial ggf. nach dem Aushärten und/oder Trocknen noch freie funktionelle Gruppen aufweist, welche in der Lage sind, mit freien funktionellen Gruppen der aushärtbaren Kunststoffzusammensetzung kovalente Bindungen oder nicht-kovalente physikalische Wechselwirkungen einzugehen.

Weist die aushärtbare Kunststoffzusammensetzung beispielsweise freie Epoxygruppen auf, welche zur Aushärtung der Kunststoffzusammensetzung mit anderen geeigneten funktionellen Gruppen der Kunststoffzusammensetzung reagieren sollen (z.B. -OH, -NH₂, -NHR, -COzH, etc.), so ist es erfindungsgemäß bevorzugt, wenn auch das Beschichtungsmaterial ggf. nach dem Aushärten und/oder Trocknen noch solche freien funktionellen Gruppen aufweist (z.B. -OH, -NH₂, -NHR, -COzH, etc.).

Weist die aushärtbare Kunststoffzusammensetzung beispielsweise freie Isocyanatgruppen auf, welche zur Aushärtung der Kunststoffzusammensetzung mit anderen geeigneten funktionellen Gruppen der Kunststoffzusammensetzung reagieren sollen (z.B. -OH, -NH₂, -NHR, etc.), so ist es erfindungsgemäß bevorzugt, wenn auch das Beschichtungsmaterial ggf. nach dem Aushärten und/oder Trocknen noch solche freien funktionellen Gruppen aufweist (z.B. -OH, -NH₂, -NHR, etc.).

Einem Fachmann ist grundsätzlich bekannt, welche Materialien in diesem Sinne miteinander kompatibel sind, d.h. welche freien funktionellen Gruppen ggf. dazu geeignet sind, beim Aushärten der Kunststoffzusammensetzung mit freien funktionellen Gruppen des Beschichtungsmaterials zu reagieren und auf diese Weise kovalente Bindungen and der Kontaktfläche von Beschichtungsmaterial und Kunststoffzusammensetzung auszubilden. Ebenso ist einem Fachmann grundsätzlich bekannt, welche Materialien in diesem Sinne miteinander kompatibel sind, d.h. welche Materialien ggf. dazu geeignet sind, beim Aushärten der Kunststoffzusammensetzung mit dem Beschichtungsmaterial durch nicht-kovalente Wechselwirkungen eine gute Haftung and der Kontaktfläche von Beschichtungsmaterial und Kunststoffzusammensetzung auszubilden

Das Beschichtungsmaterial, z.B. der Lack, kann übliche Additive enthalten, insbesondere Füllstoffe, Pigmente und ggf. auch Lösungsmittel, jeweils in üblichen Mengen.

Geeignete Beschichtungsmaterialien, z.B. Lacke, sind einem Fachmann bekannt und kommerziell verfügbar. Erfindungsgemäß besonders bevorzugte Beschichtungsmaterialien, z.B. Lacke, sind wässrige Epoxide, lösungsmittelhaltige Epoxide, trockene Epoxide, wässrige Polyurethane, lösungsmittelhaltige Polyurethane, trockene Polyurethane, wässrige Polyacrylate, lösungsmittelhaltige Polyacrylate oder trockene Polyacrylate, welche jeweils kommerziell verfügbar sind.

Bevorzugt bildet das Beschichtungsmaterial eine der beiden Außenseiten der Kunststofffolie, damit es mit dem Material, welches zur Herstellung des Kunststoffformteils eingesetzt wird, in direkten Kontakt gebracht werden kann.

Bevorzugt weist das Beschichtungsmaterial (bevorzugt im ausgehärteten, trockenen Zustand) eine Schichtdicke von mindestens 5 µm auf, bevorzugter mindestens 10 µm, noch bevorzugter mindestens 15 µm, besonders bevorzugt mindestens 20 µm, am bevorzugtesten mindestens 25 µm, und insbesondere mindestens 30 µm.

Bevorzugt weist das Beschichtungsmaterial (bevorzugt im ausgehärteten, trockenen Zustand) eine Schichtdicke von höchstens 100 µm auf, bevorzugter höchstens 90 µm, noch bevorzugter höchstens 80 µm, besonders bevorzugt höchstens 70 µm, am bevorzugtesten höchstens 60 µm, und insbesondere höchstens 50 µm.

Bevorzugt macht die Schichtdicke des Beschichtungsmaterials weniger als 50% der Gesamtschichtdicke der erfindungsgemäßen Kunststofffolie aus, bevorzugter höchstens 48%, noch bevorzugter höchstens 46%, am bevorzugtesten höchstens 44% und insbesondere höchstens 42%.

Bevorzugt wurde die dem Beschichtungsmaterial zugewandte Oberflächenseite der Kunststofffolie (Trägerfolie, haftungsmodifizierte Schicht) nicht oberflächenaktiviert, z.B. durch Corona, Plasma oder andere übliche Methoden zur Aktivierung von Kunststoffoberflächen. Erfindungsgemäß unterbleibt eine solche Oberflächenbehandlung, damit die Verbundhaftung des Oberflächenmaterials an der Kunststofffolie (Trägerfolie, haftungsmodifizierte Schicht) einerseits ausreichend groß ist, um den Bedingungen des Tiefziehens standzuhalten, andererseits aber auch nicht zu groß ist, um einen Transfer des Beschichtungsmaterials von der Kunststofffolie (Trägerfolie, haftungsmodifizierte Schicht) auf die Oberfläche des Kunststoffformteils zu ermöglichen. Erfindungsgemäß wird diese Verbundhaftung nicht durch Oberflächenaktivierung eingestellt, sondern durch die chemische Zusammensetzung von Beschichtungsmaterial einerseits und Kunststofffolie (Trägerfolie, haftungsmodifizierte Schicht) andererseits.

Damit die Verbundhaftung des Beschichtungsmaterials an der haftungsmodifizierten Schicht nicht zu groß ist, kann es erfindungsgemäß bevorzugt sein, dass die haftungsmodifizierte Schicht auf ihrer dem Beschichtungsmaterial zugewandten Oberflächenseite eine Oberflächenenergie von höchstens 42 mN/m aufweist, bevorzugter höchstens 40 mN/m, noch bevorzugter höchstens 38 mN/m, besonders bevorzugt höchstens 36 mN/m, am bevorzugtesten höchstens 34 mN/m und insbesondere höchstens 32 mN/m.

In besonders bevorzugten Ausführungsformen der erfindungsgemäßen Kunststofffolie basiert die haftungsmodifizierte Schicht auf einer Mischung, welche wenigstens ein Polyolefin und wenigstens einen Haftvermittler umfasst, wobei der Haftvermittler ausgewählt ist aus:
- säureanhydridmodifizierten Polyolefinen; bevorzugt Propfcopolymerisaten, z.B. mit ungesättigten Säureanhydriden copolymerisierten Polyolefinen (z.B. mit Maleinsäureanhydrid gepfropftes Polypropylen, PP-g-MAH oder mit Maleinsäureanhydrid gepfropftes Styrol-Ethylen/Butylene-Styrol, SEBS-g-MAH [z.B. Tuftec^{®}]);
- hydroxylmodifizierten Polyolefinen; bevorzugt mit Vinylacetat copolymerisierten Polyolefinen, welche anschließend teilweise oder vollständig verseift wurden, oder mit Hydroxyethylacrylat copolymerisierten Polyolefinen;
- säuremodifizierten Polyolefinen oder acetatmodifizierten Polyolefinen; bevorzugt mit Vinylacetat und/oder Butylacetat copolymerisierten Polyolefinen (z.B. Polyethylenen) wie z.B. Ethylen-Vinylacetat-Copolymeren oder Ethylen-Butylacetat-Copolymeren; und
- epoxymodifizierten Polyolefinen; bevorzugt mit Glycidylmethacrylat modifizierten Polyolefinen.

Die vorstehend genannten Haftvermittler haben gemeinsam, dass es sich um Copolyolefine handelt, bevorzugt Ethylen-Copolymere oder Propylen-Copolymere, welche durch Copolymerisation mit geeigneten Comonomeren erhalten wurden, die funktionelle Gruppen aufweisen. Der Gehalt an Comonomeren mit solchen funktionellen Gruppen bezogen auf die Gesamtheit aller Monomere, welche in Copolymeren enthalten sind, kann erfindungsgemäß variieren und beträgt bevorzugt mindestens 0,1 mol-%, bevorzugter mindestens 0,5 mol-%, noch bevorzugter mindestens 1,0 mol-%, besonders bevorzugt mindestens 2,5 mol-%, am bevorzugtesten mindestens 5,0 mol.-% und insbesondere mindestens 7,5 mol.-%.

Geeignete Haftvermittler sind einem Fachmann bekannt und kommerziell verfügbar. Erfindungsgemäß besonders bevorzugter Haftvermittler sind Polymere der Serie Admer^{®}, Mitsui Chemicals.

Der Gewichtsanteil des Haftvermittlers liegt bevorzugt im Bereich von 10 Gew.-% bis 65 Gew.-%, bevorzugt 20 Gew.-% bis 30 Gew.-%, bezogen auf das Gesamtgewicht der haftungsmodifizierten Schicht.

In besonders bevorzugten Ausführungsformen der erfindungsgemäßen Kunststofffolie basiert die haftungsmodifizierte Schicht auf einer Mischung, welche wenigstens ein Polyolefin und wenigstens einen Haftvermittler umfasst, wobei das wenigstens eine Polyolefin ausgewählt ist aus der Gruppe bestehend aus Polyethylen-Homopolymer, Polyethylen-Copolymer, Polypropylen-Homopolymer und Polypropylen-Copolymer; bevorzugt heterophasisches Ethylen-Propylen-Copolymer (HeCo PP). Besonders bevorzugte heterophasische Ethylen-Propylen-Copolymere sind rTPOs (*reactor-made thermoplastic olefins*)*.*

Geeignete Polyolefine sind einem Fachmann bekannt und kommerziell verfügbar. Erfindungsgemäß besonders bevorzugte Polyolefine sind Polyolefine der Serie Adflex^{®}, LyondellBasell.

Der Gewichtsanteil der Mischung beträgt bevorzugt mindestens 70 Gew.-%, bevorzugter mindestens 75 Gew.-%, noch bevorzugter mindestens 80 Gew.-%, besonders bevorzugt mindestens 85 Gew.-%, am bevorzugtesten mindestens 90 Gew.-%, und insbesondere mindestens 95 Gew.-%, jeweils bezogen auf das Gesamtgewicht der haftungsmodifizierten Schicht. Den übrigen Gewichtsanteil können ggf. übliche Additive ausmachen, wie z.B. Stabilisatoren, Antioxidantien, Antistatika, Weichmacher, Pigmente, Füllstoffe, Verarbeitungshilfen, etc.

Besonders bevorzugte Ausführungsformen H¹ bis H¹⁶ der haftungsmodifizierten Schicht sind in nachfolgender Tabelle zusammengefasst, wobei jeweils zusätzlich übliche Additive in üblichen Mengen enthalten sein können:

| | H¹ | H² | H³ | H⁴ | H⁵ | H⁶ | H⁷ | H⁸ |
|---|---|---|---|---|---|---|---|---|
| Schichtdicke [µm]: | 17±15 | 17±15 | 17±15 | 17±10 | 17±10 | 17±10 | 17±5 | 17±5 |
| Ethylen-Propylen-Copolymer [Gew.-%] | 66±20 | 66±18 | 66±16 | 66±14 | 66±12 | 66±10 | 66±8 | 66±6 |
| Haftvermittler [Gew.-%] | 27±20 | 27±18 | 27±16 | 27±14 | 27±12 | 27±10 | 27±8 | 27±6 |

| | H⁹ | H¹⁰ | H¹¹ | H¹² | H¹³ | H¹⁴ | H¹⁵ | H¹⁶ |
|---|---|---|---|---|---|---|---|---|
| Schichtdicke [µm]: | 17±15 | 17±15 | 17±15 | 17±10 | 17±10 | 17±10 | 17±5 | 17±5 |
| rTPO [Gew.-%] | 66±20 | 66±18 | 66±16 | 66±14 | 66±12 | 66±10 | 66±8 | 66±6 |
| PP-g-MAH [Gew.-%] | 27±20 | 27±18 | 27±16 | 27±14 | 27±12 | 27±10 | 27±8 | 27±6 |

Solche haftungsmodifizierten Schichten, welche auf einer Mischung umfassend wenigstens ein Polyolefin und wenigstens einen Haftvermittler basieren, haben den Vorteil, dass die Komponenten der Mischung vergleichsweise gut verträglich sind, was sich mitunter günstig auf die Beschaffenheit der erzeugten Oberfläche auswirken kann. Dafür lassen sich die Trennkräfte zwischen der haftungsmodifizierten Schicht und dem (ausgehärteten) Beschichtungsmaterial allerdings nur in etwas enger gesetzten Grenzen variieren, als dies bei Einsatz von thermoplastischen Elastomeren (TPE) oder Polyamid-Legierungen der Fall ist.

Erfindungsgemäß liegt bei Einsatz solcher haftungsmodifizierter Schichten, welche auf einer Mischung umfassend wenigstens ein Polyolefin und wenigstens einen Haftvermittler basieren, die Trennkraft zwischen der haftungsmodifizierten Schicht und dem (ausgehärteten) Beschichtungsmaterial, z.B. einem Polyurethanlack, im Bereich von 1,0 bis 10 cN/cm, bevorzugter 1,5 bis 6,0 cN/cm. Der jeweilige Wert der Trennkraft kann durch den relativen Gewichtsanteil des Haftvermittlers eingestellt werden.

Erfindungsgemäß werden zur Bestimmung der Trennkraft Probestreifen hergestellt. Dazu wird das aushärtbare Beschichtungsmaterial (z.B. ein 2-Komponenten Polyurethanlack) auf einen Bogen im DIN A4 Format der Kunststofffolie durch Rakeln aufgetragen in einer Menge, so dass die Schichtdicke des Lacks nach dem Trocknen in einem Umluftofen 40 µm beträgt. Nach dem Aushärten bzw. Trocknen des Polyurethanlacks (Beschichtungsmaterial) wird die Trennkraft zwischen der haftungsmodifizierten Schicht und dem Beschichtungsmaterial bestimmt. Die Bestimmung der Trennkraft erfolgt in Anlehnung an die Finat Testmethode (ohne Lagerung) mit Streifen einer Breite von 40 mm aus dem Bogen im DIN A4 Format mit Hilfe einer Zugprüfmaschine Typ Z0.5 der Fa. Zwick/Roell. Es werden je 3 Streifen vermessen. Die Streifen werden mit der Lackseite auf ein Metallstützblech geklebt, das mit einem doppelseitigen Klebeband (CMC 10730) ausgerüstet ist. Das Metallstützblech wird in die in untere Spannklemme der Prüfapparatur eingebracht, die Folie an Unterkante von Lack gelöst und an einen steifen Folienstreifen geklebt, welcher in die obere Spannklemme eingebracht wird. Die Messung erfolgt bei 300 mm/min.

In weiteren besonders bevorzugten Ausführungsformen der erfindungsgemäßen Kunststofffolie basiert die haftungsmodifizierte Schicht auf einer Mischung, welche wenigstens ein Polyolefin und wenigstens ein thermoplastisches Elastomer (TPE) umfasst, ggf. in Kombination mit einem oder mehreren sog. "Compatibilizern", um die Verträglichkeit des Polyolefins mit dem thermoplastischen Elastomer zu verbessern. Dabei ist das wenigstens eine Polyolefin ausgewählt aus der Gruppe bestehend aus Polyethylen-Homopolymer, Polyethylen-Copolymer, Polypropylen-Homopolymer und Polypropylen-Copolymer; bevorzugt heterophasisches Ethylen-Propylen-Copolymer (HeCo PP). Besonders bevorzugte heterophasische Ethylen-Propylen-Copolymere sind rTPOs (*reactor-made thermoplastic olefins*)*.* Das wenigstens eine thermoplastische Elastomer ist bevorzugt ausgewählt aus thermoplastischen Copolyester-Elastomeren (TPE-E), thermoplastischen Polyamid-Elastomeren (TPA) und thermoplastischen Polyurethan-Elastomeren (TPU), bevorzugt TPE-E. Geeignete thermoplastische Elastomere sind einem Fachmann bekannt und kommerziell verfügbar (z.B. der Serie Hytrel^{®}, DuPont).

Der Gewichtsanteil des thermoplastischen Elastomers liegt bevorzugt im Bereich von 1.0 Gew.-% bis 35 Gew.-%, bevorzugt 5.0 Gew.-% bis 15 Gew.-%, bezogen auf das Gesamtgewicht der haftungsmodifizierten Schicht.

Bei Einsatz von thermoplastischen Copolyester-Elastomeren (TPE-E) werden als Compatibilizer bevorzugt Ethylen-Acrylat-Copolymere oder die vorstehend beschriebenen Haftvermittler eingesetzt, bevorzugt MAH gepfropfte Ethylen-Acrylat-Copolymere und/oder Ethylen-Acrylat-Glycidylmethacrylat-Terpolymere.

Der Gewichtsanteil des Compatibilizers liegt bevorzugt im Bereich von 1.0 Gew.-% bis 25 Gew.-%, bevorzugt 2.5 Gew.-% bis 15 Gew.-%, bezogen auf das Gesamtgewicht der haftungsmodifizierten Schicht.

Solche haftungsmodifizierten Schichten, welche auf einer Mischung umfassend wenigstens ein Polyolefin und wenigstens ein thermoplastisches Elastomer (TPE), ggf. in Kombination mit einem oder mehreren "Compatibilizern" basieren, haben den Vorteil, dass sich die Trennkräfte zwischen der haftungsmodifizierten Schicht und dem (ausgehärteten) Beschichtungsmaterial in breiten Grenzen variieren lassen. Dafür sind die Komponenten der Mischung allerdings etwas schlechter miteinander verträglich.

Erfindungsgemäß liegt bei Einsatz solcher haftungsmodifizierter Schichten, welche auf einer Mischung umfassend wenigstens ein thermoplastisches Elastomer (TPE), ggf. in Kombination mit einem oder mehreren "Compatibilizern" basieren, die Trennkraft zwischen der haftungsmodifizierten Schicht und dem (ausgehärteten) Beschichtungsmaterial, z.B. einem Polyurethanlack, im Bereich von 1,0 bis 50 cN/cm, bevorzugter 2,5 bis 45 cN/cm. Der jeweilige Wert der Trennkraft kann durch den relativen Gewichtsanteil des thermoplastisches Elastomers (TPE) und ggf. des "Compatibilizers" eingestellt werden. Bei Vergleichsweise geringem Gewichtsanteil des thermoplastisches Elastomers (TPE) kann auf "Compatibilizer" noch verzichtet werden, mit steigendem Gewichtsanteil des thermoplastisches Elastomers (TPE) ist der Zusatz des "Compatibilizers" bevorzugt.

In weiteren besonders bevorzugten Ausführungsformen der erfindungsgemäßen Kunststofffolie basiert die haftungsmodifizierte Schicht auf einer Mischung, welche wenigstens ein Polyolefin und wenigstens eine Polyamid-Legierung umfasst. Dabei ist das wenigstens eine Polyolefin ausgewählt aus der Gruppe bestehend aus Polyethylen-Homopolymer, Polyethylen-Copolymer, Polypropylen-Homopolymer und Polypropylen-Copolymer; bevorzugt heterophasisches Ethylen-Propylen-Copolymer (HeCo PP). Besonders bevorzugte heterophasische Ethylen-Propylen-Copolymere sind rTPOs (*reactor-made thermoplastic olefins*)*.* Die wenigstens eine Polyamid-Legierung ist bevorzugt eine polyamidbasierte thermoplastische Legierung. Zum Zwecke der Beschreibung sind Polymerlegierungen Materialien aus zwei oder mehreren zumindest teilweise mischbaren Polymeren oder Materialien aus mehrphasigen Copolymeren. Polymerlegierungen weisen im gesamten Volumen einheitliche physikalische Eigenschaften auf. Im Vergleich dazu sind die Polymere in Polymerblends ausschließlich physikalisch gemischt und müssen nicht mischbar sein. Bevorzugt sind Polyamid-Legierungen der Serie Orgalloy^{®}, insbesondere flexible Orgalloy^{®} LT Grades. Geeignete Polyamid-Legierungen sind einem Fachmann bekannt und kommerziell verfügbar (z.B. der Serie Orgalloy^{®}, Arkema).

Der Gewichtsanteil der Polyamid-Legierung liegt bevorzugt im Bereich von 10 Gew.-% bis 60 Gew.-%, bevorzugt 25 Gew.-% bis 50 Gew.-%, bezogen auf das Gesamtgewicht der haftungsmodifizierten Schicht.

Solche haftungsmodifizierten Schichten, welche auf einer Mischung umfassend wenigstens ein Polyolefin und wenigstens eine Polyamid-Legierung basieren, haben den Vorteil, dass sich die Trennkräfte zwischen der haftungsmodifizierten Schicht und dem (ausgehärteten) Beschichtungsmaterial in breiten Grenzen variieren lassen. Dafür sind die Komponenten der Mischung allerdings etwas schlechter miteinander verträglich.

Erfindungsgemäß liegt bei Einsatz solcher haftungsmodifizierter Schichten, welche auf einer Mischung umfassend wenigstens eine Polyamid-Legierung basieren, die Trennkraft zwischen der haftungsmodifizierten Schicht und dem (ausgehärteten) Beschichtungsmaterial, z.B. einem Polyurethanlack, im Bereich von 1,0 bis 25 cN/cm, bevorzugter 2,0 bis 10 cN/cm. Der jeweilige Wert der Trennkraft kann durch den relativen Gewichtsanteil der Polyamid-Legierung eingestellt werden.

In einer bevorzugten Ausführungsform umfasst die erfindungsgemäße Kunststofffolie bevorzugt neben der haftungsmodifizierten Schicht sowie der Schicht aus dem Beschichtungsmaterial eine weitere Schicht.

Die weitere Schicht ist bevorzugt auf derjenigen Oberflächenseite der haftungsmodifizierten Schicht angeordnet, welche dem Beschichtungsmaterial abgewandt ist.

Bevorzugt bildet die weitere Schicht eine der beiden Außenseiten der Kunststofffolie. Bevorzugt besteht die erfindungsgemäße Kunststofffolie aus der Schicht aus dem Beschichtungsmaterial (erste Außenschicht), der haftungsmodifizierten Schicht (Trägerschicht) und der weiteren Schicht (zweite Außenschicht).

Bevorzugt ist die weitere Schicht auf ihrer der haftungsmodifizierten Schicht abgewandten Oberflächenseite nicht mit Release-Eigenschaften ausgerüstet, sondern weist bevorzugt lediglich keinen Haftvermittler auf im Gemisch mit den übrigen Polymeren, welche die weitere Schicht bilden. Es ist erfindungsgemäß grundsätzlich jedoch bei Bedarf möglich, die weitere Schicht auf ihrer der haftungsmodifizierten Schicht abgewandten Oberflächenseite mit Release-Eigenschaften auszurüsten, beispielsweise mit Silikonen zu beschichten.

Bevorzugt basiert die weitere Schicht auf einem Polyolefin oder einer Mischung verschiedener Polyolefine, vorzugsweise jeweils unabhängig voneinander ausgewählt aus der Gruppe bestehend aus Polyethylen-Homopolymer, Polyethylen-Copolymer, Polypropylen-Homopolymer und Polypropylen-Copolymer; bevorzugt heterophasisches Ethylen-Propylen-Copolymer (HeCo PP). Besonders bevorzugte heterophasische Ethylen-Propylen-Copolymere sind rTPOs (*reactor-made thermoplastic olefins*)*.* Geeignete Polyolefine sind einem Fachmann bekannt und kommerziell verfügbar. Erfindungsgemäß besonders bevorzugte Polyolefine sind Polyolefine der Serie Adflex^{®}, LyondellBasell und Polyolefine der Serie Inspire^{®}, Braskem.

In einer bevorzugten Ausführungsform basieren die haftungsmodifizierte Schicht und die weitere Schicht beide jeweils auf einer Mischung eines Ethylen-Propylen Copolymers mit einem weiteren Polymer, wobei dieses weitere Polymer in der haftungsmodifizierten Schicht ein Haftvermittler ist und wobei dieses weitere Polymer in der weiteren Schicht ein Ethylen-Propylen Copolymer ist, welches sich von dem anderen Ethylen-Propylen Copolymer in der weiteren Schicht unterscheidet. Die weitere Schicht basiert dann auf einer Mischung eines 1. Ethylen-Propylen Copolymers und eines 2. Ethylen-Propylen Copolymers.

Die weitere Schicht der erfindungsgemäßen Kunststofffolie weist bevorzugt eine Schichtdicke von mindestens 1,0 µm auf, bevorzugt mindestens 2,5 µm, bevorzugter mindestens 5,0 µm, noch bevorzugter mindestens 7,5 µm, besonders bevorzugt mindestens 10 µm, am bevorzugtesten mindestens 12,5 µm und insbesondere mindestens 15 µm.

Die weitere Schicht der erfindungsgemäßen Kunststofffolie weist bevorzugt eine Schichtdicke von höchstens 50 µm auf, bevorzugt höchstens 45 µm, bevorzugter höchstens 40 µm, noch bevorzugter höchstens 35 µm, besonders bevorzugt höchstens 30 µm, am bevorzugtesten höchstens 25 µm und insbesondere höchstens 20 µm.

Durch diese Ausgestaltung wird es möglich, dass die erfindungsgemäße Kunststofffolie zur Lagerung gegen sich selbst auf Rollen aufgewickelt und in dieser Form gelagert und transportiert werden kann.

Besonders bevorzugte Ausführungsformen W¹ bis W¹⁶ der weiteren Schicht sind in nachfolgender Tabelle zusammengefasst, wobei jeweils zusätzlich übliche Additive in üblichen Mengen enthalten sein können:

| | W¹ | W² | W³ | W⁴ | W⁵ | W⁶ | W⁷ | W⁸ |
|---|---|---|---|---|---|---|---|---|
| Schichtdicke [µm]: | 17±15 | 17±15 | 17±15 | 17±10 | 17±10 | 17±10 | 17±5 | 17±5 |
| 1. Ethylen-Propylen-Copolymer [Gew.-%] | 66±20 | 66±18 | 66±16 | 66±14 | 66±12 | 66±10 | 66±8 | 66±6 |
| 2. Ethylen-Propylen-Copolymer [Gew.-%] | 27±20 | 27±18 | 27±16 | 27±14 | 27±12 | 27±10 | 27±8 | 27±6 |

| | W⁹ | W¹⁰ | W¹¹ | W¹² | W¹³ | W¹⁴ | W¹⁵ | W¹⁶ |
|---|---|---|---|---|---|---|---|---|
| Schichtdicke [µm]: | 17±15 | 17±15 | 17±15 | 17±10 | 17±10 | 17±10 | 17±5 | 17±5 |
| rTPO [Gew.-%] | 66±20 | 66±18 | 66±16 | 66±14 | 66±12 | 66±10 | 66±8 | 66±6 |
| HeCo PP [Gew.-%] | 27±20 | 27±18 | 27±16 | 27±14 | 27±12 | 27±10 | 27±8 | 27±6 |

In einer bevorzugten Ausführungsform umfasst die erfindungsgemäße Kunststofffolie bevorzugt neben der haftungsmodifizierten Schicht, der Schicht aus dem Beschichtungsmaterial und der weiteren Schicht eine Kernschicht, wobei die Kernschicht bevorzugt zwischen der haftungsmodifizierten Schicht und der weiteren Schicht angeordnet ist und/oder wobei die weitere Schicht bevorzugt eine der beiden Außenseiten der Kunststofffolie bildet (bevorzugte Schichtabfolge: Beschichtungsmaterial // haftungsmodifizierte Schicht // Kernschicht // weitere Schicht).

Bevorzugt basiert die Kernschicht auf einem Polyolefin oder einer Mischung verschiedener Polyolefine, vorzugsweise jeweils unabhängig voneinander ausgewählt aus der Gruppe bestehend aus Polyethylen-Homopolymer, Polyethylen-Copolymer, Polypropylen-Homopolymer und Polypropylen-Copolymer; bevorzugt heterophasisches Ethylen-Propylen-Copolymer (HeCo PP). Besonders bevorzugte heterophasische Ethylen-Propylen-Copolymere sind rTPOs (*reactor-made thermoplastic olefins*)*.* Geeignete Polyolefine sind einem Fachmann bekannt und kommerziell verfügbar. Erfindungsgemäß besonders bevorzugte Polyolefine sind Polyolefine der Serie Adflex^{®}, LyondellBasell und Polyolefine der Serie Inspire^{®}, Braskem.

In einer bevorzugten Ausführungsform basieren sowohl die Kernschicht als auch die weitere Schicht auf einer Mischung zweier unterschiedlicher Ethylen-Propylen-Copolymere in unterschiedlichem Mischungsverhältnis (1. Ethylen-Propylen-Copolymer im Gemisch mit 2. Ethylen-Propylen-Copolymer).

Die Kernschicht weist bevorzugt eine geringere Schichtdicke als die Schicht aus Beschichtungsmaterial auf. Die Kernschicht weist bevorzugt eine größere Schichtdicke als die haftungsmodifizierte Schicht und/oder eine größere Schichtdicke als die weitere Schicht auf.

Die Kernschicht der erfindungsgemäßen Kunststofffolie weist bevorzugt eine Schichtdicke von mindestens 4,0 µm auf, bevorzugt mindestens 6,0 µm, bevorzugter mindestens 8,0 µm, noch bevorzugter mindestens 10 µm, besonders bevorzugt mindestens 15 µm, am bevorzugtesten mindestens 20 µm und insbesondere mindestens 25 µm.

Die Kernschicht der erfindungsgemäßen Kunststofffolie weist bevorzugt eine Schichtdicke von höchstens 60 µm auf, bevorzugt höchstens 55 µm, bevorzugter höchstens 50 µm, noch bevorzugter höchstens 45 µm, besonders bevorzugt höchstens 40 µm, am bevorzugtesten höchstens 35 µm und insbesondere höchstens 30 µm.

Besonders bevorzugte Ausführungsformen K¹ bis K¹⁶ der Kernschicht sind in nachfolgender Tabelle zusammengefasst, wobei jeweils zusätzlich übliche Additive in üblichen Mengen enthalten sein können:

| | K¹ | K² | K³ | K⁴ | K⁵ | K⁶ | K⁷ | K⁸ |
|---|---|---|---|---|---|---|---|---|
| Schichtdicke [µm]: | 26±25 | 26±25 | 26±25 | 26±20 | 26±20 | 26±20 | 26±15 | 26±15 |
| 1. Ethylen-Propylen-Copolymer [Gew.-%] | 80±18 | 80±16 | 80±14 | 80±12 | 80±10 | 80±8 | 80±6 | 80±4 |
| 2. Ethylen-Propylen-Copolymer [Gew.-%] | 16±14 | 16±12 | 16±10 | 16±8 | 16±6 | 16±4 | 16±2 | 16±2 |

| | K⁹ | K¹⁰ | K¹¹ | K¹² | K¹³ | K¹⁴ | K¹⁵ | K¹⁶ |
|---|---|---|---|---|---|---|---|---|
| Schichtdicke [µm]: | 26±25 | 26±25 | 26±25 | 26±20 | 26±20 | 26±20 | 26±15 | 26±15 |
| rTPO [Gew.-%] | 80±18 | 80±16 | 80±14 | 80±12 | 80±10 | 80±8 | 80±6 | 80±4 |
| HeCo PP [Gew.-%] | 16±14 | 16±12 | 16±10 | 16±8 | 16±6 | 16±4 | 16±2 | 16±2 |

Besonders bevorzugte Ausführungsformen D¹ bis D¹⁶ der erfindungsgemäßen Kunststofffolie mit insgesamt mindestens drei Schichten der Abfolge Schicht aus Beschichtungsmaterial // haftungsmodifizierte Schicht // weitere Schicht sind in nachfolgender Tabelle zusammengefasst, wobei jeweils zusätzlich übliche Additive in üblichen Mengen enthalten sein können:

| | | D¹ | D² | D³ | D⁴ | D⁵ | D⁶ | D⁷ | D⁸ |
|---|---|---|---|---|---|---|---|---|---|
| *Beschichtungsmaterial* | | | | | | | | | |
| | Schichtdicke [µm]: | 40±30 | 40±30 | 40±20 | 40±20 | 40±15 | 40±15 | 40±10 | 40±10 |
| | Polyurethan-Lack [Gew.-%] | 95±5 | 95±5 | 95±5 | 95±5 | 95±5 | 95±5 | 95±5 | 95±5 |

| *Haftungsmodifizierte Schicht* | | | | | | | | | |
|---|---|---|---|---|---|---|---|---|---|
| | Schichtdicke [µm]: | 17±15 | 17±15 | 17±15 | 17±10 | 17±10 | 17±10 | 17±5 | 17±5 |
| Ethylen-Propylen-Copolymer [Gew.-%] | | 66±20 | 66±18 | 66±16 | 66±14 | 66±12 | 66±10 | 66±8 | 66±6 |
| Haftvermittler [Gew.-%] | | 27±20 | 27±18 | 27±16 | 27±14 | 27±12 | 27±10 | 27±8 | 27±6 |

| *Weitere Schicht* | | | | | | | | | |
|---|---|---|---|---|---|---|---|---|---|
| | Schichtdicke [µm]: | 17±15 | 17±15 | 17±15 | 17±10 | 17±10 | 17±10 | 17±5 | 17±5 |
| 1. Ethylen-Propylen-Copolymer [Gew.-%] | | 66±20 | 66±18 | 66±16 | 66±14 | 66±12 | 66±10 | 66±8 | 66±6 |
| 2. Ethylen-Propylen-Copolymer [Gew.-%] | | 27±20 | 27±18 | 27±16 | 27±14 | 27±12 | 27±10 | 27±8 | 27±6 |

| | | D⁹ | D¹⁰ | D¹¹ | D¹² | D¹³ | D¹⁴ | D¹⁵ | D¹⁶ |
|---|---|---|---|---|---|---|---|---|---|
| *Beschichtungsmaterial* | | | | | | | | | |
| | Schichtdicke [µm]: | 40±30 | 40±30 | 40±20 | 40±20 | 40±15 | 40±15 | 40±10 | 40±10 |
| | Polyurethan-Lack [Gew.-%] | 95±5 | 95±5 | 95±5 | 95±5 | 95±5 | 95±5 | 95±5 | 95±5 |

| *Haftungsmodifizierte Schicht* | | | | | | | | | |
|---|---|---|---|---|---|---|---|---|---|
| | Schichtdicke [µm]: | 17±15 | 17±15 | 17±15 | 17±10 | 17±10 | 17±10 | 17±5 | 17±5 |
| | rTPO [Gew.-%] | 66±20 | 66±18 | 66±16 | 66±14 | 66±12 | 66±10 | 66±8 | 66±6 |
| | Haftvermittler [Gew.-%] | 27±20 | 27±18 | 27±16 | 27±14 | 27±12 | 27±10 | 27±8 | 27±6 |

| *Weitere Schicht* | | | | | | | | | |
|---|---|---|---|---|---|---|---|---|---|
| | Schichtdicke [µm]: | 17±15 | 17±15 | 17±15 | 17±10 | 17±10 | 17±10 | 17±5 | 17±5 |
| | rTPO [Gew.-%] | 66±20 | 66±18 | 66±16 | 66±14 | 66±12 | 66±10 | 66±8 | 66±6 |
| | HeCo PP [Gew.-%] | 27±20 | 27±18 | 27±16 | 27±14 | 27±12 | 27±10 | 27±8 | 27±6 |

Besonders bevorzugte Ausführungsformen V¹ bis V¹⁶ der erfindungsgemäßen Kunststofffolie mit insgesamt mindestens vier Schichten der Abfolge Schicht aus Beschichtungsmaterial // haftungsmodifizierte Schicht // Kernschicht // weitere Schicht sind in nachfolgender Tabelle zusammengefasst, wobei jeweils zusätzlich übliche Additive in üblichen Mengen enthalten sein können:

| | | V¹ | V² | V³ | V⁴ | V⁵ | V⁶ | V⁷ | V⁸ |
|---|---|---|---|---|---|---|---|---|---|
| *Beschichtungsmaterial* | | | | | | | | | |
| | Schichtdicke [µm]: | 40±30 | 40±30 | 40±20 | 40±20 | 40±15 | 40±15 | 40±10 | 40±10 |
| | Polyurethan-Lack [Gew.-%] | 95±5 | 95±5 | 95±5 | 95±5 | 95±5 | 95±5 | 95±5 | 95±5 |

| *Haftungsmodifizierte Schicht* | | | | | | | | | |
|---|---|---|---|---|---|---|---|---|---|
| | Schichtdicke [µm]: | 17±15 | 17±15 | 17±15 | 17±10 | 17±10 | 17±10 | 17±5 | 17±5 |
| Ethylen-Propylen-Copolymer [Gew.-%] | | 66±20 | 66±18 | 66±16 | 66±14 | 66±12 | 66±10 | 66±8 | 66±6 |
| Haftvermittler [Gew.-%] | | 27±20 | 27±18 | 27±16 | 27±14 | 27±12 | 27±10 | 27±8 | 27±6 |

| *Kernschicht* | | | | | | | | | |
|---|---|---|---|---|---|---|---|---|---|
| | Schichtdicke [µm]: | 26±25 | 26±25 | 26±25 | 26±20 | 26±20 | 26±20 | 26±15 | 26±15 |
| 1. Ethylen-Propylen-Copolymer | | 80±18 | 80±16 | 80±14 | 80±12 | 80±10 | 80±8 | 80±6 | 80±4 |
| [Gew.-%] | | | | | | | | | |
| 2. Ethylen-Propylen-Copolymer [Gew.-%] | | 16±14 | 16±12 | 16±10 | 16±8 | 16±6 | 16±4 | 16±2 | 16±2 |

| *Weitere Schicht* | | | | | | | | | |
|---|---|---|---|---|---|---|---|---|---|
| | Schichtdicke [µm]: | 17±15 | 17±15 | 17±15 | 17±10 | 17±10 | 17±10 | 17±5 | 17±5 |
| 1. Ethylen-Propylen-Copolymer [Gew.-%] | | 66±20 | 66±18 | 66±16 | 66±14 | 66±12 | 66±10 | 66±8 | 66±6 |
| 2. Ethylen-Propylen-Copolymer [Gew.-%] | | 27±20 | 27±18 | 27±16 | 27±14 | 27±12 | 27±10 | 27±8 | 27±6 |

| | | V⁹ | V¹⁰ | V¹¹ | V¹² | V¹³ | V¹⁴ | V¹⁵ | V¹⁶ |
|---|---|---|---|---|---|---|---|---|---|
| *Beschichtungsmaterial* | | | | | | | | | |
| | Schichtdicke [µm]: | 40±30 | 40±30 | 40±20 | 40±20 | 40±15 | 40±15 | 40±10 | 40±10 |
| | Polyurethan-Lack [Gew.-%] | 95±5 | 95±5 | 95±5 | 95±5 | 95±5 | 95±5 | 95±5 | 95±5 |

| *Haftungsmodifizierte Schicht* | | | | | | | | | |
|---|---|---|---|---|---|---|---|---|---|
| | Schichtdicke [µm]: | 17±15 | 17±15 | 17±15 | 17±10 | 17±10 | 17±10 | 17±5 | 17±5 |
| | rTPO [Gew.-%] | 66±20 | 66±18 | 66±16 | 66±14 | 66±12 | 66±10 | 66±8 | 66±6 |
| | Haftvermittler [Gew.-%] | 27±20 | 27±18 | 27±16 | 27±14 | 27±12 | 27±10 | 27±8 | 27±6 |

| *Kernschicht* | | | | | | | | | |
|---|---|---|---|---|---|---|---|---|---|
| | Schichtdicke [µm]: | 26±25 | 26±25 | 26±25 | 26±20 | 26±20 | 26±20 | 26±15 | 26±15 |
| | rTPO [Gew.-%] | 80±18 | 80±16 | 80±14 | 80±12 | 80±10 | 80±8 | 80±6 | 80±4 |
| | HeCo PP [Gew.-%] | 16±14 | 16±12 | 16±10 | 16±8 | 16±6 | 16±4 | 16±2 | 16±2 |

| *Weitere Schicht* | | | | | | | | | |
|---|---|---|---|---|---|---|---|---|---|
| | Schichtdicke [µm]: | 17±15 | 17±15 | 17±15 | 17±10 | 17±10 | 17±10 | 17±5 | 17±5 |
| | rTPO [Gew.-%] | 66±20 | 66±18 | 66±16 | 66±14 | 66±12 | 66±10 | 66±8 | 66±6 |
| | HeCo PP [Gew.-%] | 27±20 | 27±18 | 27±16 | 27±14 | 27±12 | 27±10 | 27±8 | 27±6 |

Ein weiterer Aspekt der Erfindung betrifft ein Verfahren zur Herstellung der vorstehend beschriebenen erfindungsgemäßen Kunststofffolie zur Beschichtung von Kunststoffformteilen umfassend die Schritte:
(a-1) Bereitstellen einer Folie umfassend eine haftungsmodifizierte Schicht, welche zumindest eine der beiden Außenseiten der Folie bildet;
(a-2) teil- oder vollflächiges Beschichten der Außenseite der Folie mit einem Beschichtungsmaterial, vorzugsweise mit einem aushärtbaren Beschichtungsmaterial in einem aushärtbaren Zustand; und
(a-3) Trocknen und/oder Aushärten des Beschichtungsmaterials, bevorzugt thermisch.

Alle bevorzugten Ausführungsformen, welche vorstehend im Zusammenhang mit der erfindungsgemäßen Kunststofffolie beschrieben wurden, gelten analog auch für das erfindungsgemäße Verfahren.

Ein weiterer Aspekt der Erfindung betrifft ein Verfahren zur Beschichtung von Kunststoffformteilen mit einem Beschichtungsmaterial umfassend die Schritte
(a) Bereitstellen einer vorstehend beschriebenen erfindungsgemäßen Kunststofffolie;
(b) Tiefziehen der Kunststofffolie, bevorzugt bei Raumtemperatur; bevorzugt in einem Werkzeug zur Herstellung von Kunststoffformteilen;
(c) Kontaktieren des Beschichtungsmaterials mit einer aushärtbaren Kunststoffzusammensetzung; und
(d) Aushärten der Kunststoffzusammensetzung;
wobei die Verbundhaftung des Beschichtungsmaterials an der ausgehärteten Zusammensetzung größer ist als die Verbundhaftung des Beschichtungsmaterials an der haftungsmodifizierten Schicht der Kunststofffolie.

Alle bevorzugten Ausführungsformen, welche vorstehend im Zusammenhang mit der erfindungsgemäßen Kunststofffolie sowie dem erfindungsgemäßen Verfahren zur Herstellung dieser Kunststofffolie beschrieben wurden, gelten analog auch für das erfindungsgemäße Verfahren zur Beschichtung von Kunststoffformteilen mit einem Beschichtungsmaterial.

Bevorzugt ist die aushärtbare Zusammensetzung ein Polyurethanschaum.

Ein weiterer Aspekt der Erfindung betrifft die Verwendung der vorstehend beschriebenen erfindungsgemäßen Kunststofffolie zum Beschichten eines Kunststoffformteils mit dem Beschichtungsmaterial, wobei die Verwendung vorzugsweise in dem vorstehend beschriebenen erfindungsgemäßen Verfahren zur Beschichtung von Kunststoffformteilen mit einem Beschichtungsmaterial erfolgt.

Alle bevorzugten Ausführungsformen, welche vorstehend im Zusammenhang mit der erfindungsgemäßen Kunststofffolie sowie den beiden erfindungsgemäßen Verfahren beschrieben wurden, gelten analog auch für die erfindungsgemäße Verwendung.

In einer erfindungsgemäß besonders bevorzugten Ausführungsform der Erfindung umfasst
- die haftungsmodifizierte Schicht als Polyolefin ein heterophasisches Ethylen-Propylen-Copolymer, besonders bevorzugt ein rTPOs, und als Haftvermittler ein mit Maleinsäureanhydrid gepfropftes Polypropylen;
- das Beschichtungsmaterial einen Polyurethan-Lack; und
- die aushärtbare Kunststoffzusammensetzung, d.h. das Material des Kunststoffformteils, einen Polyurethan-Schaum.

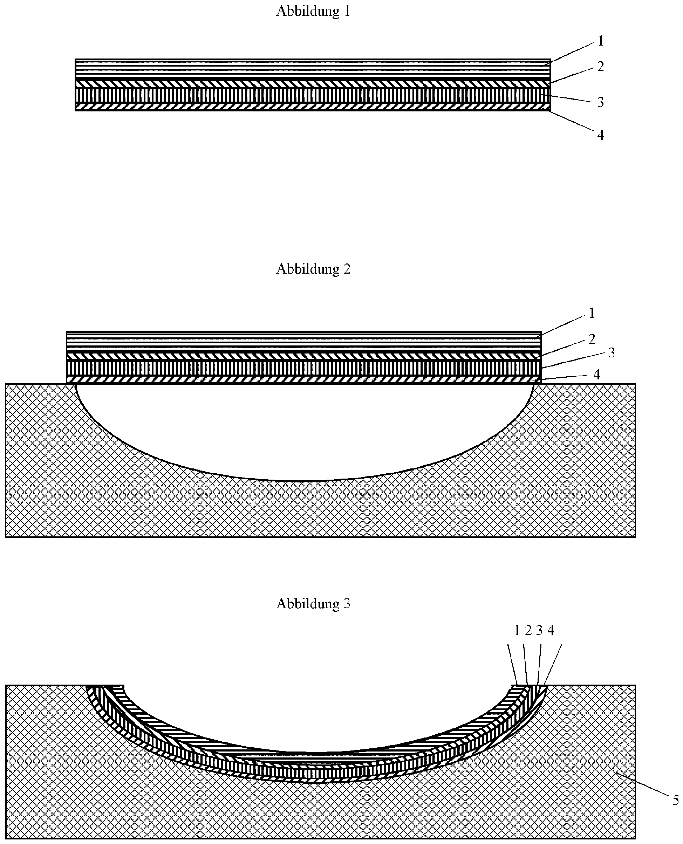

Die Erfindung wird nachfolgend anhand von Abbildungen 1 bis 6 schematisch erläutert.

Abbildung 1 zeigt schematisch eine bevorzugte Ausführungsform der erfindungsgemäßen Kunststofffolie mit Schicht aus Beschichtungsmaterial (1), haftungsmodifizierter Schicht (2), Kernschicht (3) und weiterer Schicht (4) im noch nicht tiefgezogenen Zustand.

Abbildung 2 zeigt schematisch, wie die erfindungsgemäße Kunststofffolie gemäß Abbildung 1 auf ein Werkzeug (5) zur Herstellung von Kunststoffformteilen aufgebracht und an den Rändern luftdicht verschlossen wird. Das Werkzeug (5) bildet dadurch zusammen mit der Kunststofffolie einen Hohlraum, wobei die weitere Schicht (4) dem Innern des Hohlraums zugewandt ist.

Abbildung 3 zeigt schematisch die Kunststofffolie gemäß Abbildung 2, nachdem sie in dem Werkzeug (5) tiefgezogen wurde, so dass sich die tiefgezogene Kunststofffolie an die innere Oberfläche des Werkzeugs (5) anschmiegt. Die weitere Schicht (4) der Kunststofffolie berührt dabei die innere Oberfläche des Werkzeugs (5). Die Schicht aus Beschichtungsmaterial (1) ist dem Innenraum der durch das Tiefziehen entstandenen Form zugewandt.

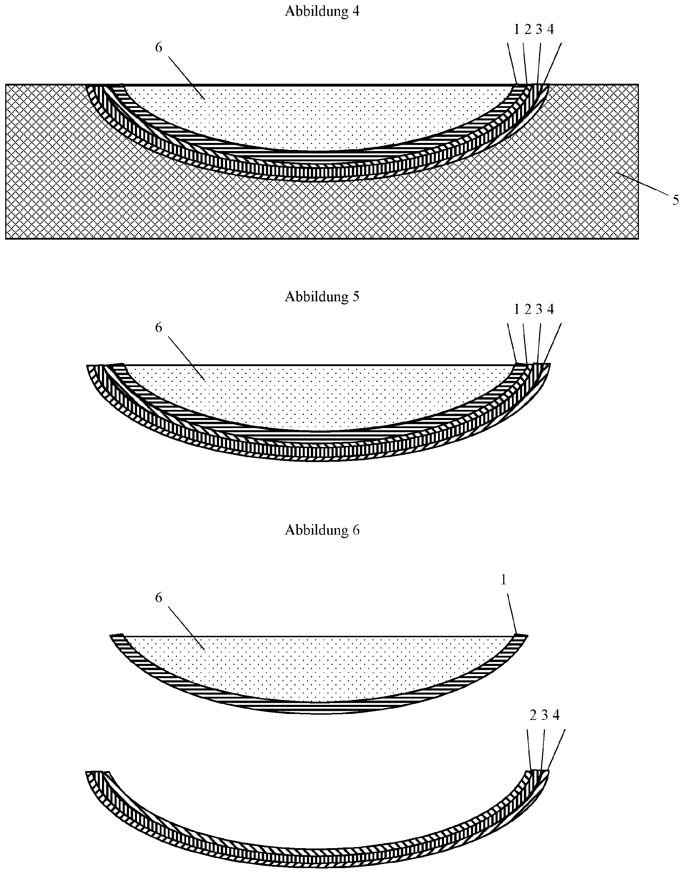

Abbildung 4 zeigt die Ausbildung eines Kunststoffformteils (6) aus einer aushärtbaren Kunststoffzusammensetzung im Innenraum der durch das Tiefziehen entstandenen Form, beispielsweise durch Einspritzen eines Pulyurethanschaums.

Abbildung 5 zeigt das aus dem Werkzeug (5) (nicht abgebildet) entnommene Kunststoffformteil (6) nach dem Aushärten der Kunststoffzusammensetzung. Da die Haftung der weiteren Schicht (4) an der inneren Oberfläche des Werkzeugs (5) (nicht abgebildet) nur gering ist, kann das Kunststoffformteil (6) rückstandsfrei mitsamt der daran haftenden Schicht aus dem Beschichtungsmaterial (1) und den übrigen Schichten der Kunststofffolie entnommen werden. In diesem Zustand schützt die Kunststofffolie das Kunststoffformteil (6) mitsamt der daran haftenden Schicht aus dem Beschichtungsmaterial (1).

Abbildung 6 zeigt schematisch, wie die Kunststofffolie ohne die Schicht aus dem Beschichtungsmaterial (1) von dem Kunststoffformteil (6) abgezogen werden kann. Da die Haftung des Beschichtungsmaterials (1) am Kunststoffformteil (6) stärker ist als die Haftung des Beschichtungsmaterials (1) and der haftungsmodifizierten Schicht (2) der Kunststofffolie, erfolgt die Spaltung zwischen der Schicht aus dem Beschichtungsmaterial (1) und der haftungsmodifizierten Schicht (2). Das Beschichtungsmaterial (1) bleibt daher auf dem Kunststoffformteil (6) zurück und die äußere Oberfläche des Beschichtungsmaterials wird rückstandfrei freigelegt. Auf diese Weise wurde das Beschichtungsmaterial (1) von der Kunststofffolie auf das Kunststoffformteil (6) übertragen.

### Bezugszeichenliste:

(1) - Schicht aus Beschichtungsmaterial
(2) - haftungsmodifizierte Schicht
(3) - Kernschicht
(4) - weitere Schicht
(5) - Werkzeug
(6) - Kunststoffformteil

Die nachfolgenden Beispiele erläutern die Erfindung, sind jedoch nicht einschränkend auszulegen.

Es wurden drei verschiedene Kunststofffolien hergestellt aus jeweils drei Schichten mit einer Gesamtfoliendicke (ohne Beschichtungsmaterial) von 60 µm. Die Zusammensetzung der haftungsmodifizierten Schicht wurde dabei hinsichtlich des Gehalts an Haftvermittler variiert, alle übrigen Parameter wurden konstant gehalten.

Die so hergestellten Kunststofffolien wurden auf der Oberfläche der haftungsmodifizierten Schicht (erste Außenseite) mit einem kommerziell verfügbaren 2-Komponenten Polyurethanlack als Beschichtungsmaterial beschichtet. Zur Herstellung der Probestreifen wurde der 2-Komponenten Polyurethanlack auf einen Bogen im DIN A4 Format der Kunststofffolie durch Rakeln aufgetragen in einer Menge, so dass die Schichtdicke des Lacks nach dem Trocknen in einem Umluftofen 40 µm betrug.

Nach dem Aushärten bzw. Trocknen des Polyurethanlacks (Beschichtungsmaterial) wurden die Trennkräfte zwischen der haftungsmodifizierten Schicht und dem Beschichtungsmaterial bestimmt. Der Folienaufbau sowie die gemessenen Trennkräfte sind in nachfolgender Tabelle zusammengefasst:

| | | 1 | 2 | 3 |
|---|---|---|---|---|
| *Haftungsmodifizierte Schicht (erste Auβenseite)* | | | | |
| | Schichtdicke: | 17 µm | 17 µm | 17 µm |
| | rTPO (Adflex^{®} Q 100 F) | 92,3 % | 65,3 % | 50 % |
| | Haftvermittler (Admer QB 520 E) | 0 % | 27 % | 50 % |
| | Additive (UV Stabilisator, Antiblockmittel, Verarbeitungshilfe) | 7,7 % | 7,7 % | 7,7 % |

| *Kernschicht* | | | | |
|---|---|---|---|---|
| | Schichtdicke: | 26 µm | 26 µm | 26 µm |
| | rTPO (Adflex^{®} Q 100 F) | 80 % | 80 % | 80 % |
| | HeCo PP (Inspire^{®} D137) | 16 % | 16 % | 16 % |
| | Additive (UV Stabilisator, Farbstoff) | 4 % | 4 % | 4 % |

| *Weitere Schicht (zweite Auβenseite)* | | | | |
|---|---|---|---|---|
| | Schichtdicke: | 17 µm | 17 µm | 17 µm |
| | rTPO (Adflex^{®} Q 100 F) | 65,3 % | 65,3 % | 65,3 % |
| | HeCo PP (Inspire^{®} D137) | 27 % | 27 % | 27 % |
| Additive (UV Stabilisator, Antiblockmittel, Verarbeitungshilfe) | | 7,7 % | 7,7 % | 7,7 % |
| Trennkraft [cN/cm] | | 2,0±0,1 | 4.0±0,3 | 5,3±0,3 |

Die Bestimmung der Trennkräfte erfolgte in Anlehnung an die Finat Testmethode (ohne Lagerung) mit Streifen eine Breite von 40 mm aus dem Bogen im DIN A4 Format mit Hilfe einer Zugprüfmaschine Typ Z0.5 der Fa. Zwick/Roell. Es wurden je 3 Streifen vermessen. Die Streifen wurden mit der Lackseite auf ein Metallstützblech geklebt, das mit einem doppelseitigen Klebeband (CMC 10730) ausgerüstet war. Das Metallstützblech wurde in die in untere Spannklemme der Prüfapparatur eingebracht, die Folie an Unterkante von Lack gelöst und an einen steifen Folienstreifen geklebt, welcher in die obere Spannklemme eingebracht wurde. Die Messung erfolgte bei 300 mm/min.

## Patentansprüche

1. Eine Kunststofffolie zur Beschichtung von Kunststoffformteilen mit einem Beschichtungsmaterial, wobei die Kunststofffolie eine haftungsmodifizierte Schicht sowie eine Schicht aus dem Beschichtungsmaterial umfasst;
wobei die Kunststofffolie bei Raumtemperatur tiefziehfähig ist;
wobei das Beschichtungsmaterial die haftungsmodifizierte Schicht teil- oder vollflächig bedeckt;
wobei die haftungsmodifizierte Schicht eine Schichtdicke von mindestens 1,0 µm aufweist, mit dem Beschichtungsmaterial in direktem Kontakt steht, und
(i) auf ihrer dem Beschichtungsmaterial zugewandten Oberflächenseite eine Oberflächenenergie von mindestens 27 mN/m aufweist; und
(ii) auf einer Mischung basiert, welche wenigstens ein Polyolefin und wenigstens (a) einen Haftvermittler, (b) ein thermoplastisches Elastomer oder (c) eine Polyamid-Legierung umfasst.

2. Die Kunststofffolie nach Anspruch 1, wobei das Beschichtungsmaterial
- aus einer aushärtbaren Zusammensetzung hergestellt wurde; und/oder
- im ausgehärten Zustand vorliegt; und/oder
- ein Lack ist, welcher vorzugsweise ein thermisch härtender Lack ist und/oder auf Polyurethan, Polyacrylat oder Epoxid basiert.

3. Die Kunststofffolie nach einem der vorstehenden Ansprüche, wobei das Beschichtungsmaterial
- bei 23°C eine Bruchdehnung von mindestens 100% aufweist; und/oder
- eine der beiden Außenseiten der Kunststofffolie bildet; und/oder
- eine Schichtdicke von mindestens 5 µm aufweist.

4. Die Kunststofffolie nach einem der vorstehenden Ansprüche,
- wobei die dem Beschichtungsmaterial zugewandte Oberflächenseite der Kunststofffolie nicht oberflächenaktiviert wurde; und/oder
- wobei die Polymere oder Polymermischungen in allen Schichten jeweils eine Schmelztemperatur von mindestens 110°C aufweisen, bestimmt durch DSC gemäß DIN EN ISO 11357-3:2018-07; und/oder
- wobei die haftungsmodifizierte Schicht auf ihrer dem Beschichtungsmaterial zugewandten Oberflächenseite eine Oberflächenenergie von höchstens 45 mN/m aufweist.

5. Die Kunststofffolie nach einem der vorstehenden Ansprüche, wobei die haftungsmodifizierte Schicht auf einer Mischung basiert, welche wenigstens ein Polyolefin und wenigstens einen Haftvermittler umfasst, wobei
(i) der Haftvermittler ausgewählt ist aus säureanhydridmodifizierten Polyolefinen, hydroxylmodifizierten Polyolefinen, säuremodifizierten Polyolefinen, acetatmodifizierten Polyolefinen und epoxymodifizierten Polyolefinen, und/oder
(ii) der Gewichtsanteil des Haftvermittlers im Bereich von 10 Gew.-% bis 65 Gew.-% liegt, bezogen auf das Gesamtgewicht der haftungsmodifizierten Schicht; und/oder
(iii) das wenigstens eine Polyolefin ausgewählt ist aus der Gruppe bestehend aus Polyethylen-Homopolymer, Polyethylen-Copolymer, Polypropylen-Homopolymer und Polypropylen-Copolymer.

6. Die Kunststofffolie nach einem der Ansprüche 1 bis 4, wobei die haftungsmodifizierte Schicht auf einer Mischung basiert, welche wenigstens ein Polyolefin und wenigstens ein thermoplastisches Elastomer umfasst, wobei
(i) das thermoplastische Elastomer ausgewählt ist aus thermoplastischen Copolyester-Elastomeren, thermoplastischen Polyamid-Elastomeren und thermoplastischen Polyurethan-Elastomeren; und/oder
(ii) der Gewichtsanteil des thermoplastischen Elastomers im Bereich von 1.0 Gew.-% bis 35 Gew.-% liegt, bezogen auf das Gesamtgewicht der haftungsmodifizierten Schicht; und/oder
(iii) das wenigstens eine Polyolefin ausgewählt ist aus der Gruppe bestehend aus Polyethylen-Homopolymer, Polyethylen-Copolymer, Polypropylen-Homopolymer und Polypropylen-Copolymer;
und die haftungsmodifizierte Schicht vorzugsweise zusätzlich mindestens einen Compatibilizer umfasst, wobei
(i) der Compatibilizer ausgewählt ist aus Ethylen-Acrylat-Copolymeren, MAH gepfropften Ethylen-Acrylat-Copolymere und Ethylen-Acrylat-Glycidylmethacrylat-Terpolymeren; und/oder
(ii) der Gewichtsanteil des Compatibilizers im Bereich von 1.0 Gew.-% bis 20 Gew.-% liegt, bezogen auf das Gesamtgewicht der haftungsmodifizierten Schicht.

7. Die Kunststofffolie nach einem der Ansprüche 1 bis 4, wobei die haftungsmodifizierte Schicht auf einer Mischung basiert, welche wenigstens ein Polyolefin und wenigstens eine Polyamid-Legierung umfasst, wobei
(i) die Polyamid-Legierung eine polyamidbasierte thermoplastische Legierung ist; und/oder
(ii) der Gewichtsanteil der Polyamid-Legierung im Bereich von 10 Gew.-% bis 60 Gew.-% liegt, bezogen auf das Gesamtgewicht der haftungsmodifizierten Schicht; und/oder
(iii) das wenigstens eine Polyolefin ausgewählt ist aus der Gruppe bestehend aus Polyethylen-Homopolymer, Polyethylen-Copolymer, Polypropylen-Homopolymer und Polypropylen-Copolymer.

8. Die Kunststofffolie nach einem der vorstehenden Ansprüche, welche neben der haftungsmodifizierten Schicht sowie der Schicht aus dem Beschichtungsmaterial eine weitere Schicht umfasst.

9. Die Kunststofffolie nach Anspruch 8, wobei die weitere Schicht
- auf derjenigen Oberflächenseite der haftungsmodifizierten Schicht angeordnet ist, welche dem Beschichtungsmaterial abgewandt ist; und/oder
- eine der beiden Außenseiten der Kunststofffolie bildet; und/oder
- auf ihrer der haftungsmodifizierten Schicht abgewandten Oberflächenseite mit Release-Eigenschaften ausgerüstet ist.

10. Die Kunststofffolie nach einem der vorstehenden Ansprüche, welche
- eine Gesamtschichtdicke von mindestens 30 µm aufweist; und/oder
- bei Raumtemperatur eine Bruchdehnung von mindestens 100% aufweist; und/oder
- wenigstens einseitig geprägt ist.

11. Ein Verfahren zur Herstellung einer Kunststofffolie zur Beschichtung von Kunststoffformteilen mit einem Beschichtungsmaterial nach einem der Ansprüche 1 bis 10 umfassend die Schritte:
(a-1) Bereitstellen einer Folie umfassend eine haftungsmodifizierte Schicht, welche zumindest eine der beiden Außenseiten der Folie bildet;
(a-2) teil- oder vollflächiges Beschichten der Außenseite mit einem Beschichtungsmaterial; und
(a-3) Trocknen und/oder Aushärten des Beschichtungsmaterials.

12. Ein Verfahren zur Beschichtung von Kunststoffformteilen mit einem Beschichtungsmaterial umfassend die Schritte
(a) Bereitstellen einer Kunststofffolie nach einem der Ansprüche 1 bis 10;
(b) Tiefziehen der Kunststofffolie, bevorzugt bei Raumtemperatur;
(c) Kontaktieren des Beschichtungsmaterials mit einer aushärtbaren Kunststoffzusammensetzung; und
(d) Aushärten der Kunststoffzusammensetzung;
wobei die Verbundhaftung des Beschichtungsmaterials an der ausgehärteten Zusammensetzung größer ist als die Verbundhaftung des Beschichtungsmaterials an der haftungsmodifizierten Schicht der Kunststofffolie.

13. Das Verfahren nach Anspruch 12, wobei die aushärtbare Zusammensetzung ein Polyurethanschaum ist.

14. Verwendung einer Kunststofffolie nach einem der Ansprüche 1 bis 10 zum Beschichten eines Kunststoffformteils mit dem Beschichtungsmaterial.

15. Die Verwendung nach Anspruch 14 in einem Verfahren nach Anspruch 11 oder 12.

## Claims

1. A plastic film for the coating of plastic moldings with a coating material, the plastic film comprising an adhesion-modified layer and a layer of the coating material;
wherein the plastic film can be deep-drawn at room temperature; wherein the coating material partly or wholly covers the adhesion-modified layer;
wherein the adhesion-modified layer has a layer thickness of at least 1.0 um, is in direct contact with the coating material, and
(i) has a surface energy of at least 27 mN/m on its surface side facing the coating material; and
(ii) is based on a mixture which comprises at least one polyolefin and at least (a) an adhesion promoter, (b) a thermoplastic elastomer or (c) a polyamide alloy.

2. The plastic film according to claim 1, wherein the coating material
has been produced from a curable composition; and or
is in the cured state; and/or
is a varnish, which is preferably a thermosetting varnish and/or based on polyurethane, polyacrylate or epoxy.

3. The plastic film according to any one of the preceding claims, wherein the coating material
has an elongation at break of at least 100% at 23 °C; and/or
forms one of the two outer sides of the plastic film; and/or
has a layer thickness of at least 5 µm.

4. The plastic film according to any one of the preceding claims, wherein the surface side of the plastic film facing the coating material has not been surface-activated; and/or
wherein the polymers or polymer mixtures in all layers have in each case a melting temperature of at least 110 °C, determined by DSC according to DIN EN ISO 11357-3:2018-07; and/or
wherein the adhesion-modified layer has a surface energy of at most 45 mN/m on its surface side facing the coating material.

5. The plastic film according to any one of the preceding claims, wherein the adhesion-modified layer is based on a mixture which comprises at least one polyolefin and at least one adhesion promoter, wherein
(i) the adhesion promoter is selected from acid anhydride-modified polyolefins, hydroxyl-modified polyolefins, acid-modified polyolefins, acetate-modified polyolefins and epoxy-modified polyolefins; and/or
(ii) the weight fraction of the adhesion promoter is in the range from 10% by weight to 65% by weight, based on the total weight of the adhesion-modified layer; and/or
(iii) the at least one polyolefin is selected from the group consisting of polyethylene homopolymer, polyethylene copolymer, polypropylene homopolymer and polypropylene copolymer.

6. The plastic film according to any one of claims 1 to 4, wherein the adhesion-modified layer is based on a mixture which comprises at least one polyolefin and at least one thermoplastic elastomer, wherein
(i) the thermoplastic elastomer is selected from thermoplastic copolyester elastomers, thermoplastic polyamide elastomers and thermoplastic polyurethane elastomers; and/or
(ii) the weight fraction of the thermoplastic elastomer is in the range from 1.0% by weight to 35% by weight, based on the total weight of the adhesion-modified layer; and/or
(iii) the at least one polyolefin is selected from the group consisting of polyethylene homopolymer, polyethylene copolymer, polypropylene homopolymer and polypropylene copolymer;
and the adhesion-modified layer preferably additionally comprises at least one compatibilizer, wherein
(i) the compatibilizer is selected from ethylene-acrylate copolymers, MAH grafted ethylene-acrylate copolymers and ethylene-acrylate-glycidyl methacrylate terpolymers; and/or
(ii) the weight fraction of the compatibilizer is in the range from 1.0% by weight to 20% by weight, based on the total weight of the adhesion-modified layer.

7. The plastic film according to any one of claims 1 to 4, wherein the adhesion-modified layer is based on a mixture which comprises at least one polyolefin and at least one polyamide alloy, wherein
(i) the polyamide alloy is a polyamide-based thermoplastic alloy; and/or
(ii) the weight fraction of the polyamide alloy is in the range from 10% by weight to 60% by weight, based on the total weight of the adhesion-modified layer; and/or
(iii) the at least one polyolefin is selected from the group consisting of polyethylene homopolymer, polyethylene copolymer, polypropylene homopolymer and polypropylene copolymer.

8. The plastic film according to any one of the preceding claims, which comprises a further layer in addition to the adhesion-modified layer and the layer made of the coating material.

9. The plastic film according to claim 8, wherein the further layer
is arranged on that surface side of the adhesion-modified layer which faces away from the coating material; and/or
forms one of the two outer sides of the plastic film; and/or is furnished with release properties on its surface side facing away from the adhesion-modified layer.

10. The plastic film according to any one of the preceding claims, which
has a total layer thickness of at least 30 µm; and/or
has an elongation at break of at least 100% at room temperature; and/or
is embossed on at least one side.

11. A method for producing a plastic film for coating plastic moldings with a coating material according to any one of claims 1 to 10, comprising the steps of:
(a-1) providing a film comprising an adhesion-modified layer which forms at least one of the two outer sides of the film;
(a-2) partial or wholly coating the outer side with a coating material; and
(a-3) drying and/or curing of the coating material.

12. A method for coating of plastic moldings with a coating material comprising the steps of
(a) providing a plastic film according to any one of claims 1 to 10;
(b) deep-drawing the plastic film, preferably at room temperature;
(c) contacting the coating material with a curable plastics composition; and
(d) curing the plastics composition;
wherein the bond adhesion of the coating material to the cured composition is greater than the bond adhesion of the coating material to the adhesion-modified layer of the plastic film.

13. The method of claim 12, wherein the curable composition is a polyurethane foam.

14. Use of a plastic film according to any one of claims 1 to 10 for coating a plastic molding with the coating material.

15. The use according to claim 14 in a method according to claim 11 or 12.

## Revendications

1. Film plastique pour revêtir des pièces moulées en plastique avec un matériau de revêtement, dans lequel le film plastique comprend une couche à adhérence modifiée et une couche constituée du matériau de revêtement ;
dans lequel le film plastique peut être embouti profondément à température ambiante ;
dans lequel le matériau de revêtement recouvre partiellement ou complètement la couche à adhérence modifiée ;
dans lequel la couche à adhérence modifiée a une épaisseur de couche d'au moins 1,0 µm, est en contact direct avec le matériau de revêtement, et
(i) a une énergie de surface d'au moins 27 mN/m sur sa surface faisant face au matériau de revêtement ; et
(ii) est à base d'un mélange qui comprend au moins une polyoléfine et au moins (a) un promoteur d'adhésion, (b) un élastomère thermoplastique ou (c) un alliage de polyamide.

2. Film plastique selon la revendication 1, dans lequel le matériau de revêtement
- a été fabriqué à partir d'une composition durcissable ; et/ou
- est à l'état durci ; et/ou
- est un vernis, qui est de préférence un vernis thermodurcissable et/ou est à base de polyuréthane, polyacrylate ou époxy.

3. Film plastique selon l'une quelconque des revendications précédentes, dans lequel le matériau de revêtement
- a un allongement à la rupture d'au moins 100 % à 23 °C ; et/ou
- forme l'une des deux faces extérieures du film plastique ; et/ou
- a une épaisseur de couche d'au moins 5 µm.

4. Film plastique selon l'une quelconque des revendications précédentes,
- dans lequel la surface du film plastique faisant face au matériau de revêtement n'a pas été activé en surface ; et ou
- dans lequel les polymères ou mélanges de polymères dans toutes les couches ont chacun une température de fusion d'au moins 110 °C, déterminée par DSC selon DIN EN ISO 11357-3:2018-07 ; et/ou
- dans lequel la couche à adhérence modifiée a une énergie de surface de 45 mN/m maximum sur sa surface faisant face au matériau de revêtement.

5. Film plastique selon l'une quelconque des revendications précédentes, dans lequel la couche à adhérence modifiée est à base d'un mélange qui comprend au moins une polyoléfine et au moins un promoteur d'adhésion, dans lequel
(i) le promoteur d'adhésion est choisi parmi les polyoléfines modifiées par un anhydride d'acide, les polyoléfines modifiées par un hydroxyle, les polyoléfines modifiées par un acide, les polyoléfines modifiées par l'acétate et les polyoléfines modifiées par un époxy ; et/ou
(ii) la proportion en poids du promoteur d'adhésion est comprise dans une plage allant de 10 % en poids à 65 % en poids, sur la base du poids total de la couche à adhérence modifiée ; et/ou
(iii) l'au moins une polyoléfine est choisie dans le groupe constitué d'un homopolymère de polyéthylène, d'un copolymère de polyéthylène, d'un homopolymère de polypropylène et d'un copolymère de polypropylène.

6. Film plastique selon l'une quelconque des revendications 1 à 4, dans lequel la couche à adhérence modifiée est à base d'un mélange qui comprend au moins une polyoléfine et au moins un élastomère thermoplastique, dans lequel
(i) l'élastomère thermoplastique est choisi parmi les élastomères de copolyester thermoplastique, les élastomères de polyamide thermoplastique et les élastomères de polyuréthane thermoplastique ; et/ou
(ii) la proportion en poids de l'élastomère thermoplastique est comprise dans une plage allant de 1,0 % en poids à 35 % en poids, sur la base du poids total de la couche à adhérence modifiée ; et/ou
(iii) l'au moins une polyoléfine est choisie dans le groupe constitué d'un homopolymère de polyéthylène, d'un copolymère de polyéthylène, d'un homopolymère de polypropylène et d'un copolymère de polypropylène ;
et la couche à adhérence modifiée comprend de préférence en outre au moins un agent compatibilisant, dans lequel
(i) l'agent compatibilisant est choisi parmi les copolymères éthylène-acrylate, les copolymères éthylène-acrylate greffés MAH et les terpolymères éthylène-acrylate-méthacrylate de glycidyle ; et/ou
(ii) la proportion en poids de l'agent compatibilisant est comprise dans une plage allant de 1,0 % en poids à 20 % en poids, sur la base du poids total de la couche à adhérence modifiée.

7. Film plastique selon l'une quelconque des revendications 1 à 4, dans lequel la couche à adhérence modifiée est à base d'un mélange qui comprend au moins une polyoléfine et au moins un alliage de polyamide, dans lequel
(i) l'alliage de polyamide est un alliage thermoplastique à base de polyamide ; et/ou
(ii) la proportion en poids de l'alliage de polyamide est comprise dans une plage allant de 10 % en poids à 60 % en poids, sur la base du poids total de la couche à adhérence modifiée ; et/ou
(iii) l'au moins une polyoléfine est choisie dans le groupe constitué d'un homopolymère de polyéthylène, d'un copolymère de polyéthylène, d'un homopolymère de polypropylène et d'un copolymère de polypropylène.

8. Film plastique selon l'une quelconque des revendications précédentes, qui comprend une couche supplémentaire en plus de la couche à adhérence modifiée et de la couche constituée du matériau de revêtement.

9. Film plastique selon la revendication 8, dans lequel la couche supplémentaire
- est disposée sur la surface de la couche à adhérence modifiée qui est opposée au matériau de revêtement ; et/ou
- forme l'une des deux faces extérieures du film plastique ; et/ou
- est dotée de propriétés antiadhésives sur sa face opposée à la couche à adhérence modifiée.

10. Film plastique selon l'une quelconque des revendications précédentes, qui
- a une épaisseur de couche totale d'au moins 30 µm ; et/ou
- a un allongement à la rupture d'au moins 100 % à température ambiante ; et/ou
- est estampé au moins d'un côté.

11. Procédé de fabrication d'un film plastique pour revêtir des pièces moulées en plastique avec un matériau de revêtement selon l'une quelconque des revendications 1 à 10, comprenant les étapes :
(a-1) fourniture d'un film comprenant une couche à adhérence modifiée qui forme au moins l'une des deux faces extérieures du film ;
(a-2) revêtement partiel ou complet de la face extérieure avec un matériau de revêtement ; et
(a-3) séchage et/ou durcissement du matériau de revêtement.

12. Procédé pour revêtir des pièces moulées en plastique avec un matériau de revêtement comprenant les étapes
(a) fourniture d'un film plastique selon l'une quelconque des revendications 1 à 10 ;
(b) emboutissage profond du film plastique, de préférence à température ambiante ;
(c) mise en contact du matériau de revêtement avec une composition plastique durcissable ; et
(d) durcissement de la composition plastique ;
dans lequel l'adhésion composite du matériau de revêtement à la composition durcie est supérieure à l'adhésion composite du matériau de revêtement à la couche à adhérence modifiée du film plastique.

13. Procédé selon la revendication 12, dans lequel la composition durcissable est une mousse de polyuréthane.

14. Utilisation d'un film plastique selon l'une des revendications 1 à 10 pour revêtir une pièce moulée en plastique avec le matériau de revêtement.

15. Utilisation selon la revendication 14 dans un procédé selon la revendication 11 ou 12.
